# EUROPEAN PATENT APPLICATION

(11) **EP 4 797 576 A1**
(43) Date of publication of application: **26.08.2026**
(21) Application number: 26158625.9
(22) Date of filing: 13.02.2026
(51) Int. Cl.: H04B 13/00

(54) **HUMAN BODY COMMUNICATION VIA ELECTRONIC EYEWEAR DEVICES**

(30) Priority: 19.02.2025 US 202563760324 P; 02.02.2026 US 202619467605
(71) Applicant: Meta Platforms Technologies, LLC, Menlo Park, CA 94025 (US)
(72) Inventor: Cook, Benjamin, Menlo Park (US); Zhu, Jiang, Menlo Park (US); Morimoto, Yasuo, Menlo Park (US)
(74) Representative: Murgitroyd & Company

(57) **Abstract**

A device of the subject technology includes a human body communication (HBC) controller and a first electrode electrically coupled to the HBC controller and arranged to contact skin of a user when the user wears the device. The device further includes a second electrode electrically coupled to the HBC controller.

## Description

### CROSS REFERENCE TO RELATED APPLICATIONS

The present disclosure is related and claims priority under 35 USC §119(e) to U.S. Provisional Application No. 63/760,324, entitled "HUMAN BODY COMMUNICATION VIA ELECTRONIC EYEWEAR DEVICES," filed on February 19, 2025.

### TECHNICAL FIELD

The present disclosure generally relates to human body communication, and more particularly, to human body communication via electronic eyewear devices.

### BACKGROUND

Human body communication (HBC) has emerged as a promising technology that leverages the conductive properties of the human body to transmit signals for data exchange. Unlike conventional wireless communication methods such as Bluetooth or Wi-Fi, HBC utilizes the body itself as a transmission medium, enabling secure, low-power, and short-range connectivity between wearable devices, medical sensors, and consumer electronics. This approach reduces electromagnetic interference and enhances energy efficiency, making it particularly suitable for applications in healthcare monitoring, biometric authentication, and personal area networks. Early research has demonstrated that capacitive and galvanic coupling techniques can be employed to establish reliable communication channels through the body's tissues, offering an alternative to traditional radio frequency systems.

Despite its advantages, HBC faces challenges related to signal attenuation, variability in body composition, and environmental factors that may affect transmission quality. To address these issues, ongoing studies have focused on optimizing electrode design, modulation schemes, and adaptive signal processing techniques. Furthermore, the integration of HBC into wearable ecosystems requires careful consideration of safety standards, interoperability, and user comfort. As demand for seamless and secure body-centric communication grows, innovations in this field are expected to play a critical role in advancing next-generation healthcare solutions, personalized electronics, and human-machine interfaces.

### SUMMARY

The present invention provides human body communication device and method as defined in the appended claims

In accordance with a first aspect, there is provided a device comprising a human body communication (HBC) controller and a first electrode electrically coupled to the HBC controller and arranged to contact skin of a user when the user wears the device. The device further comprises a second electrode electrically coupled to the HBC controller.

The device may be an eyewear device.

Optionally, the device comprises a frame and at least a first lens, wherein the second electrode comprises a transparent electrode arranged within the first lens and wherein the first electrode is arranged within the frame.

The first electrode may be arranged on a nose bridge portion of the frame.

Optionally, the HBC controller is configured to transmit and/or receive signals at the first electrode, and wherein the second electrode comprises a floating ground electrode.

The device may further comprise a display, and wherein the second electrode may comprise a transparent layer within the display.

The second electrode may comprise a transparent electrode functioning as an active dimming layer of the display, and wherein the transparent electrode may further function as at least one of a floating ground for a body area network (BAN), a wireless antenna for at least one of Bluetooth, Wi-Fi and cellular network.

The second electrode may comprise a transparent electrode functioning as a display shield.

The second electrode may comprise a transparent metal layer.

The second electrode may comprise a transparent metal layer comprising indium-tin-oxide (ITO).

At least one of the first electrode or the second electrode may be electrically coupled to the HBC controller.

In accordance with a second aspect, there is provided a method comprising configuring a device to comprise an HBC controller, electrically coupling a first electrode to the HBC controller and configuring the first electrode to contact skin of a user upon the device being worn by the user. The method further comprises electrically coupling a second electrode to the HBC controller.

The method may further comprise configuring the HBC to transmit and/or receive signals at the first electrode, and wherein the second electrode may comprise a transparent electrode functioning as a floating ground electrode.

The device may be an eyewear device comprising a frame and at least a first lens.

The method may further comprise arranging the second electrode within the first lens and arranging the first electrode on a nose bridge portion of the frame.

The method may further comprise:
configuring the device to comprise a display;
arranging the second electrode as a layer within the display; and
configuring the second electrode to function as an active dimming layer of the display.

The second electrode may comprise one of a display shield, a transparent metal layer comprising as ITO, and the method may further comprise electrically coupling at least one of the first electrode or the second electrode to the HBC controller.

In accordance with a second aspect, there is provided a wearable electronic device, the device comprising a housing comprising a first electrode, an HBC controller electrically coupled to the first electrode and configured to transmit and/or receive signals at the first electrode and a second electrode electrically coupled to the HBC controller. The first electrode is arranged to contact skin of a user when the user wears the device.

The device may be an eyewear device comprising a frame and at least a first lens, the second electrode may comprise a transparent electrode arranged within the first lens and configured to function as a floating ground, and the first electrode may be arranged on a nose bridge portion of the frame.

The second electrode may be a transparent layer within the display, and the transparent layer may comprise a transparent metal layer comprising ITO or a mesh and may be configured to function as at least one of an active dimming layer of the display, a display shield, a floating ground for a body area network (BAN), or a wireless antenna for at least one of Bluetooth, Wi-Fi and cellular network.

It will be appreciated that any features described herein as being suitable for incorporation into one or more aspects are intended to be generalizable across any and all aspects described herein. Other aspects can be understood by those skilled in the art in light of the description, the claims and the drawings. The foregoing general description and the following detailed description are exemplary and explanatory only and are not restrictive of the claims.

### BRIEF DESCRIPTION OF THE DRAWINGS

To easily identify the discussion of any particular element or act, the most significant digit or digits in a reference number refer to the figure number in which that element is first introduced.
FIG. 1 is a schematic diagram illustrating an example scenario of HBC between two devices, in accordance with some aspects of the subject technology.
FIG. 2 is a schematic diagram illustrating an example of a circuit model of HBC, in accordance with some aspects of the subject technology.
FIGs. 3A and 3B are schematic diagrams illustrating an example of wearable devices, in accordance with some aspects of the subject technology.
FIG. 4 is a perspective view of an illustrative eyewear device, in accordance with some aspects of the subject technology.
FIG. 5 is a schematic diagram illustrating an example artificial-reality system, in accordance with some aspects of the subject technology.
FIG. 6 is a schematic diagram illustrating an example artificial-reality system with a handheld device, in accordance with some aspects of the subject technology.
FIG. 7A is a schematic diagram illustrating example user interactions within an artificial-reality system, in accordance with some aspects of the subject technology.
FIG. 7B is a schematic diagram illustrating example user interactions within an artificial-reality system, in accordance with some aspects of the subject technology.
FIG. 8A is a schematic diagram illustrating example user interactions within an artificial-reality system, in accordance with some aspects of the subject technology.
FIG. 8B is a schematic diagram illustrating example user interactions within an artificial-reality system, in accordance with some aspects of the subject technology.
FIG. 9 is a schematic diagram illustrating an example of a wrist-device of an artificial-reality system, in accordance with some aspects of the subject technology.
FIG. 10 is a block diagram illustrating an example of a wearable artificial-reality system, in accordance with some aspects of the subject technology.
FIG. 11 is a schematic diagram illustrating an example of an augmented-reality system, in accordance with some aspects of the subject technology.
FIG. 12A is a schematic diagram illustrating an example of a virtual-reality system, in accordance with some aspects of the subject technology.
FIG. 12B is a schematic diagram illustrating another example of the virtual-reality systems shown in FIG. 12A.
FIG. 13 is a block diagram illustrating an example of system components of example artificial-and virtual-reality, in accordance with some aspects of the subject technology.
FIG. 14 is a flow diagram illustrating an example of method of manufacturing a device of the subject technology.

In one or more implementations, not all of the depicted components in each figure may be required, and one or more implementations may include additional components not shown in a figure. Variations in the arrangement and type of the components may be made without departing from the scope of the appended claims. Additional components, different components, or fewer components may be utilized within the scope of the appended claims.

### DETAILED DESCRIPTION

The detailed description set forth below describes various configurations of the subject technology and is not intended to represent the only configurations in which the subject technology may be practiced. The detailed description includes specific details for the purpose of providing a thorough understanding of the subject technology. Accordingly, dimensions may be provided in regard to certain aspects as non-limiting examples. However, it will be apparent to those skilled in the art that the subject technology may be practiced without these specific details. In some instances, well-known structures and components are shown in block diagram form in order to avoid obscuring the concepts of the subject technology.

It is to be understood that the present disclosure includes examples of the subject technology and does not limit the scope of the appended claims. Various aspects of the subject technology will now be disclosed according to particular but non-limiting examples. Various embodiments described in the present disclosure may be carried out in different ways and variations, and in accordance with a desired application or implementation.

In the following detailed description, numerous specific details are set forth to provide a full understanding of the present disclosure. It will be apparent, however, to one ordinarily skilled in the art, that embodiments of the present disclosure may be practiced without some of the specific details. In other instances, well-known structures and techniques have not been shown in detail so as not to obscure the disclosure.

Some aspects of the subject disclosure are generally directed to techniques for improved communication between devices in an HBC system. In particular, the techniques provide for an increased link budget for communication between two devices communicating with each other through an HBC system. The devices may each be a wearable device, such as a wrist-worn device (e.g., a watch, bracelet or a wristband), a head-mounted device (e.g., glasses, a headset, earphones, or a hearing aid), or some other wearable electronic device.

In various embodiments, the present disclosure uses transparent metal structures in the lens as the floating ground for body area network (BAN). Idea is to use transparent metal structures such as indium-tin oxide (ITO) or a metal mesh, in the lens stuck-up of an augmented reality (AR) or smart glasses (GS) as a floating ground. The current use of transparent metal structure is for activating dimming. The transparent metal structures, ITO or metal mesh may also be used for antenna as well. The transparent metal structure in the lens has the largest metallic surface area in glass front face, and the metallic surface is relatively far away from the skin as compared to the metallic structure in the temple arm. Therefore, the transparent metal structure in the lens is ideal for HBC as a floating ground. The benefit of energy efficiency resulting from the disclosed technology enables two-part systems including, for example, an AR and/or a GS and a watch and/or a wrist band.

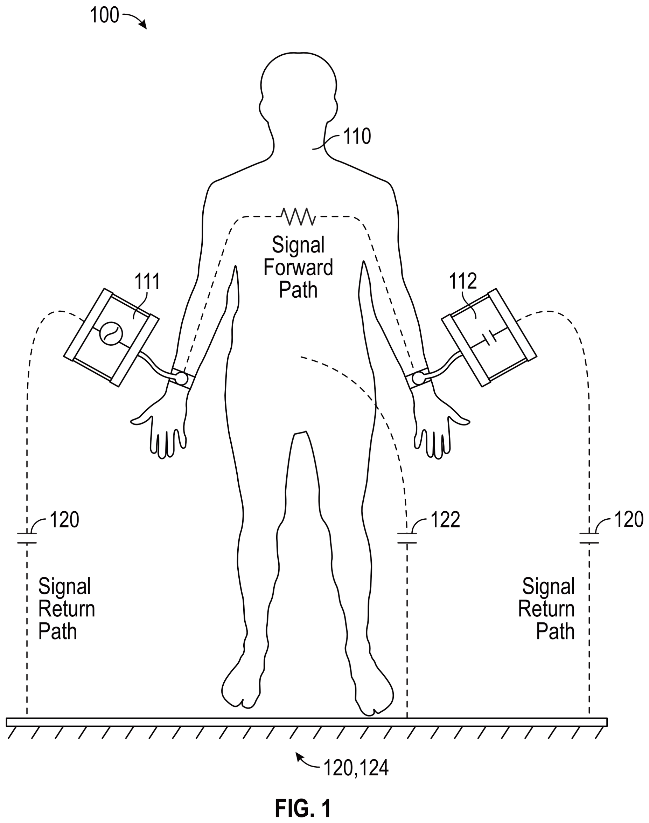

Turning now to the figures, FIG. 1 is a schematic diagram illustrating an example scenario100 of HBC between two devices, in accordance with some aspects of the subject technology. In HBC, two electronic devices communicate with one another (either in two-way or one-way communication) by sending electrical signals through the human body. Advantages of this approach for communication versus wireless communication include lower power demands, lower latency, and greater physical security. The scenario 100 depicts HBC between two devices 111 and 112, which communicate through a user's body 110 via the labeled "signal forward path" with resistance 114. As shown, each of the devices 111 and 112 have an electrode that couples to the user's skin and between which a signal propagates during communication. In addition, both devices have a second ground electrode. During operation, the return path of the signal passes from the ground electrodes of one of the devices into the earth ground 124 and up to the ground electrode of the other device. Capacitances 120 are associated with this signal path, which completes the electrical circuit between the devices 111 and 112.

One of the challenges with this arrangement is that the ground electrodes of the devices can couple with the body in addition to the earth ground, which reduces the link budget by compromising the signal return path. In addition, the user's body can couple to the earth ground, as shown by the body capacitance 122, which can also compromise the signal return path. The techniques described herein mitigate these challenges by configuring the ground electrode of a deviceto increase the capacitance between the ground electrode and the earth ground. Optionally, the ground electrodes may also be configured to reduce the capacitance between the ground electrode and the user's body.

In some embodiments, the ground electrode in a device of an HBC system is arranged to be as distant as possible from the user's body, which reduces the capacitance between the ground electrode and the user's body, and increases the capacitance between the ground electrode and the earth ground. These effects may be further enhanced in some embodiments by configuring the ground electrode to have a large surface area.

In some embodiments, the ground electrode in a device in an HBC system may be selected as a conductive element that is generally already present in the device absent the HBC system. For instance, an electrode in a device that is used for some purpose other than as an electrode in an HBC system can be coupled to a controller of an HBC system and act as a ground electrode in that network in addition to its usual purpose. As one example, a display module of a device may include an electrode used as part of the display screen, or for touch sensing. This electrode may be coupled to a controller of an HBC system and act as a ground electrode in the HBC system.

In some embodiments, the ground electrode in a device in an HBC system may be a transparent electrode. In some cases, a transparent electrode may already be present in a wearable device, and the electrode can be coupled to a controller of an HBC system and act as a ground electrode in that network in addition to its usual purpose. For example, a display shield for a display module, or a metal mesh in an active dimming module, of a device may be configured as a transparent electrode (e.g., an ITO electrode). In either case, an existing transparent conductor (e.g., made of ITO) may be operated as a floating ground electrode in an HBC system, for example, by being coupled to a controller of an HBC system.

Utilizing a transparent conductive layer of an active dimming module (e.g., an ITO layer) in an eyewear device as a floating ground of an HBC system may have several advantages. As one example, the large surface area of the lens area in an eyewear device provides a large surface area for a ground electrode coupling to the ground electrode of another HBC device and/or for coupling to the environment for a return signal path. As another example, the lens area in an eyewear device naturally is further from the skin of the wearer. It is preferable that the floating ground of an HBC device is further from the skin to maximize the link through the body of the device. A transparent conductor in a lens area of an eyewear device naturally provides a large distance to the skin.

In some embodiments, the ground electrode in a device of an HBC system may be some, or all of, a housing of the wearable device. The housing may include one or more electrically conductive portions, and these portions may be coupled to a controller of an HBC device and act as a ground electrode in a network between HBC devices. While a housing may in some cases be located close to the user's body when the device is worn, the portion of the housing selected as the ground electrode may be oriented perpendicular to, or otherwise away from, the skin that limits the capacitance between the portion of the housing and the skin.

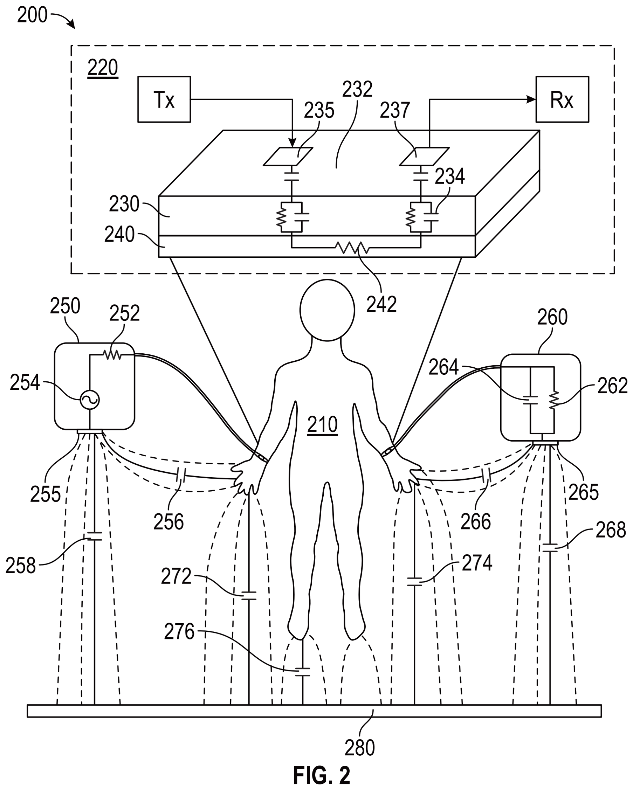

FIG. 2 is a schematic diagram illustrating an example of a circuit model 200 of an HBC, in accordance with some aspects of the subject technology. The circuit model 200 of a HBC system including a circuit model 220 of skin and tissue. The circuit model 220 shows skin 230 and tissue 240, transmit (Tx) electrode 235, receive (Rx) electrode 237, electrode-to-skin capacitance 232, tissue resistance 242 as well as capacitance 234 and resistance 236 coupling skin 230 to tissue 240.

A source (TX device) 250 includes an internal resistance 252, a voltage-source 254 and a signal electrode 255. The load (RX device) includes a load resistance 262, a load capacitance 264 and a floating ground 265. The return-signal path between the source 250 and the load 260 has a Tx return capacitance 258 and an Rx return capacitance 268. Without wishing to be bound by theory, the techniques described herein are based on an observation that the strength of the signal-forward path through the body increases as the capacitances 258 and 268 increase. TX-ground capacitance 272 and RX-ground capacitance 274 couple skin 230 of user wearing the devices to the ground 280, respectively.

For instance, at a capacitance of 3 pF for capacitances 258 and 268, the signal strength through the forward path through the body may be about 5-10 dB greater than the signal strength at a capacitance of 1 pF for capacitance 258 and 268. Conversely, the greater the TX capacitances 256, load capacitance 264, body capacitance 276, and Rx capacitance 266, the lower the signal strength of the forward signal path through the body. This is because these parasitic couplings compromise the return signal path through the earth ground 280. While Rx capacitance 266 could be decreased by reducing the size of the ground electrode, this would also reduce Rx return capacitance 268, which acts against an increased signal strength. Instead, by keeping the ground of the device further from the skin, Rx capacitance 266 can be reduced while keeping Rx return capacitance 268 suitably large. In some embodiments, the source could be wrist device such as a smart watch or a wrist band and the load could be an AR/SG device with a floating ground.

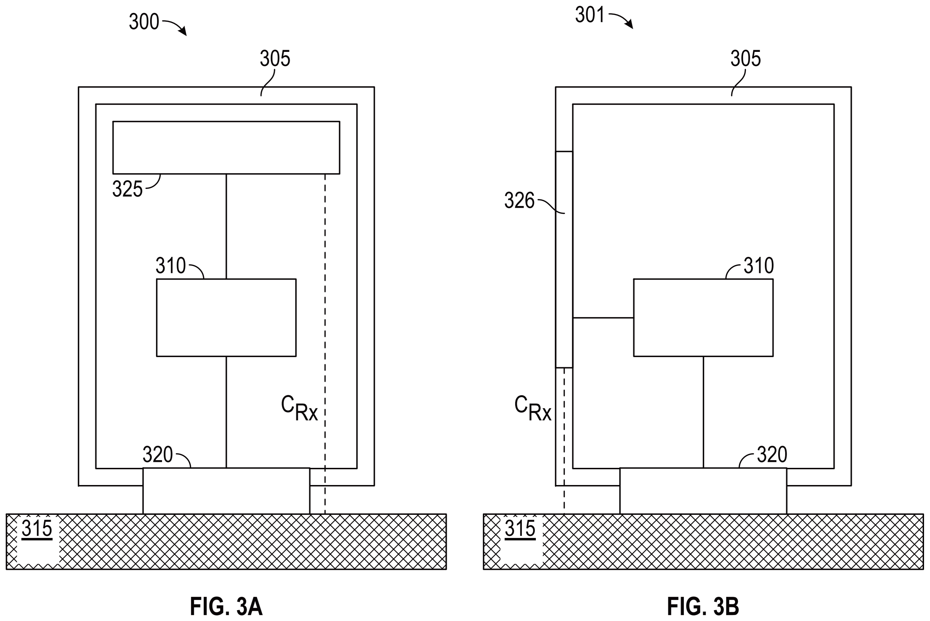

FIGs. 3A and 3B are schematic diagrams illustrating an example of wearable devices, in accordance with some aspects of the subject technology. In the example of FIG. 3A, a device 300 includes an HBC controller 310 within a housing 305. A signal electrode 320 is arranged to both couple to the HBC controller 310 and to make contact with the skin 315 of a user when the device is worn by the user. The HBC controller 310 is also coupled to a floating ground electrode 325, which has capacitance CRx with the skin as shown and as described above. The example of FIG. 3B is the same as FIG. 3A, except that device301 utilizes an electrically conductive housing portion 326 of the housing 305 as the floating ground electrode, which has capacitance CRx with the skin as shown and as described above. As shown, while the electrically conductive housing portion 326 may be arranged closer to the skin 315 than the floating ground electrode 325, the orientation of the electrically conductive housing portion 326 means that the of FIG. 2 with the skin may nonetheless be suitably small.

The examples of FIG. 3A and 3B are not intended to be limited to any particular shape of wearable device, including the housing shape. For instance, wearable devices 300 and 301 could each represent a wrist-worn device (e.g., a watch, bracelet or a wristband), a head-mounted device (e.g., glasses, a headset, earphones, or a hearing aid), or some other wearable electronic device.

Both of the wearable devices 300 and 301 may include any number of additional components not shown in these drawings, including but not limited to, a display, buttons, dials, one or more PCBs or other substrates, one or more processors, one or more sensors, etc. As described above, the floating ground electrode 325 may also be utilized as part of any such component. For instance, as well as being coupled to the HBC controller 310, the floating ground electrode 325 may be used as an electrode in a display or other part of the device 300 separate from the HBC components. In the example of FIG. 3B, the electrically conductive housing portion 326 is utilized as a portion of the housing in addition to being used as a floating ground in the HBC circuit.

According to some embodiments, the couplings between the HBC controller and any of the signal electrode 320, floating ground electrode 325, and the electrically conductive housing portion 326 may be implemented as direct connections between these elements. However, other couplings that include intervening components (e.g., one or more amplifiers, capacitors, one or more resistors, etc.) may also be arranged between the human body communication controller and any of the electrodes. As such, any references herein to coupling between a human body communication controller and an electrode should be taken to include each of these types of coupling.

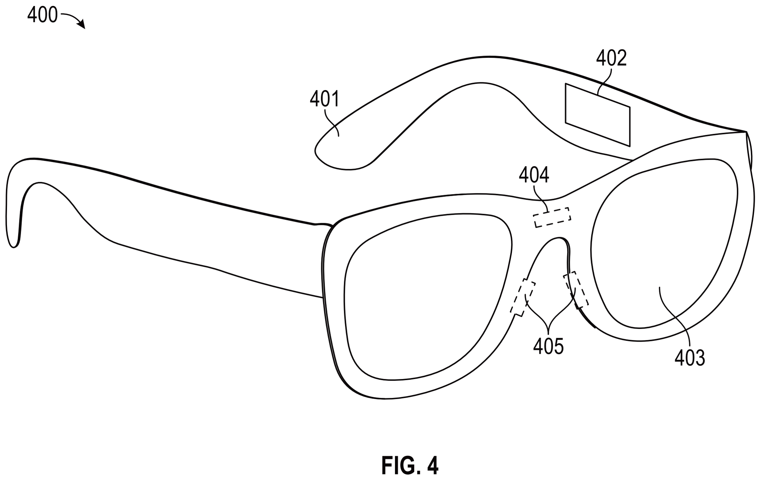

FIG. 4 is a perspective view of an illustrative eyewear device 400, in accordance with some aspects of the subject technology. The eyewear device 400 is one example of a suitable device that may be used as either of wearable devices 300 or 301 of FIG. 3, described above. In the example of FIG. 4, the eyewear device 400 includes a frame 401 that includes two arms and a front face that comprises openings for lenses and/or display. A human body communication controller and other components described above as being inside the housing of a device may be arranged within and/or mounted onto the frame 401. In the example of FIG. 4, an HBC controller 402 is mounted to one arm of the frame 401.

In the example of FIG. 4, eyewear device 400 includes a display 403 mounted within the frame so that a user can view images on the displays (e.g., as an augmented reality or mixed reality system). In some embodiments, display 403 comprises a transparent electrode utilized as a floating ground of a HBC system by being coupled to HBC controller 402. For example, display 403 may include a display shield that comprises a transparent electrode that is coupled to the human body communication controller 402. Other configurations of a display comprising an electrode that may be coupled to the human body communication controller 402 are described below.

Eyewear device 400 includes optional electrodes 404 and 405, which each depict the location of a suitable signal electrode arranged to contact the skin. Electrode 404 is arranged on or in a nose bridge portion of frame 401 and may be coupled to HBC controller 402 via wires or other conductive paths that run through the frame. Electrodes 405 are arranged on sides of the nose contacts of the frame 401 and may be coupled to HBC controller 402 via wires or other conductive paths that run through the frame 401.

According to some embodiments, a floating ground electrode within a lens of an eyewear device and which is coupled to an HBC controller, may be selected to be various components within the lens. As a first example, a transparent electrode may be arranged above, below or both above and below an optical layer in the lens, such as a liquid crystal (LC) layer, a light-emitting polymer (LEP) layer, or an electrochromic layer. The transparent electrode may be operated (e.g., its voltage controlled) to control the optical layer, in addition to the transparent electrode being coupled to the HBC controller. As a second example, a metal mesh layer may be arranged within a stack of layers of the lens, which includes an optical layer, wherein the metal mesh layer is coupled to a HBC controller as a floating ground. The metal mesh layer may be part of a dimmable display, for instance, or could be an additional layer added to the lens purely as a floating ground for the human body communication system.

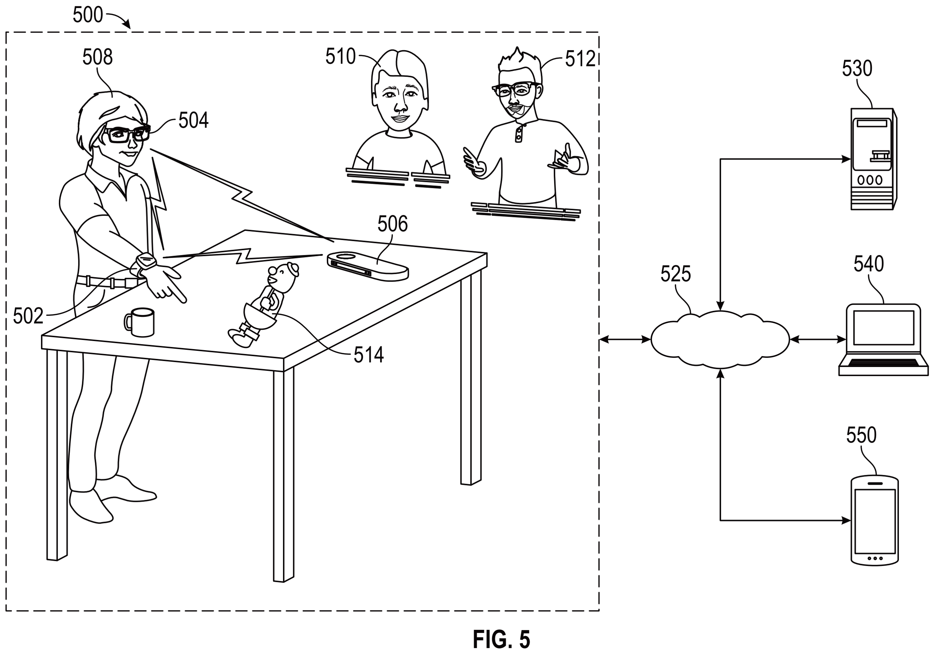

Features from any of the embodiments described herein may be used in combination with one another in accordance with the general principles described herein. These and other embodiments, features, and advantages will be more fully understood upon reading the following detailed description in conjunction with the accompanying drawings and claims. FIGS. 5-8B illustrate example AR systems in accordance with some embodiments of the subject disclosure.

FIG. 5 is a schematic diagram illustrating an example artificial-reality system 500, in accordance with some aspects of the subject technology. The AR system 500 is a first example of user interactions using a wrist-device502, a head-device (e.g., AR glasses 1100), and/or a handheld intermediary processing device (HIPD) 506 by a user 508 interacting with users /avatars 510 and 512 via a network 525. The wrist-device502, AR glasses 504, and/or HIPD 506 can communicatively couple via a network 525 (e.g., cellular, near field, Wi-Fi, personal area network, wireless LAN, etc.). Additionally, wrist-device502, AR glasses 504, and/or HIPD 506 can also communicatively couple with one or more servers 530, computers 540 (e.g., laptops, computers, etc.), mobile devices 550 (e.g., smartphones, tablets, etc.), and/or other electronic devices via network 525 (e.g., cellular, near field, Wi-Fi, personal area network, wireless LAN, etc.).

In FIG. 5, a user 508 is shown wearing wrist-device502 and AR glasses 504 and having HIPD 506 on their desk. The wrist-device502, AR glasses 504, and HIPD 506 facilitate user interaction with an AR environment. In particular, as shown by first AR system 500, wrist-device502, AR glasses 504, and/or HIPD 506 cause presentation of one or more avatars 510, digital representations of contacts 512, and virtual objects 514. As discussed below, user 508 can interact with one or more avatars 510, digital representations of contacts 512, and virtual objects 514 via wrist-device502, AR glasses 504, and/or HIPD 506.

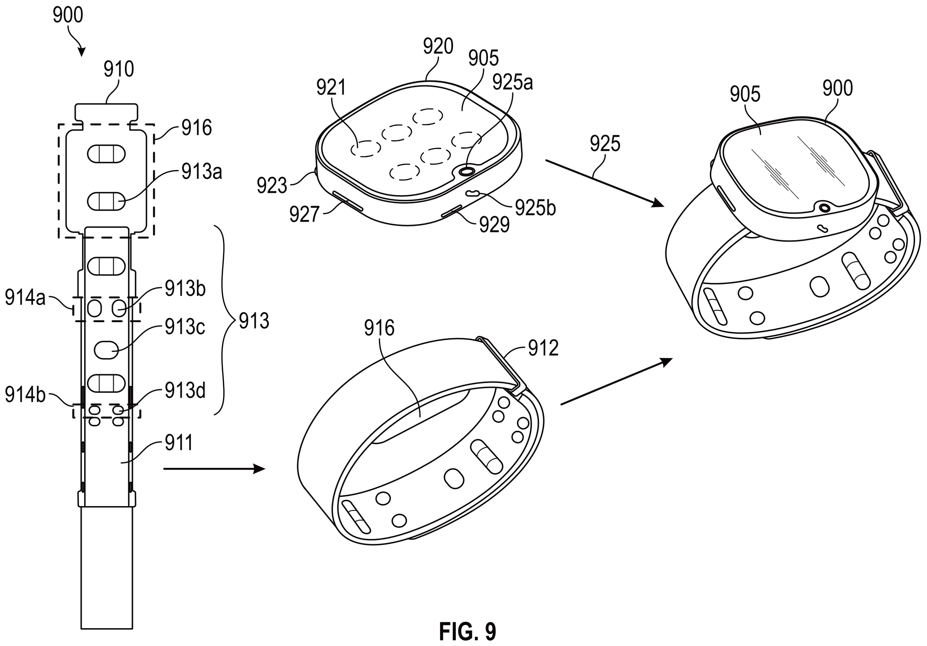

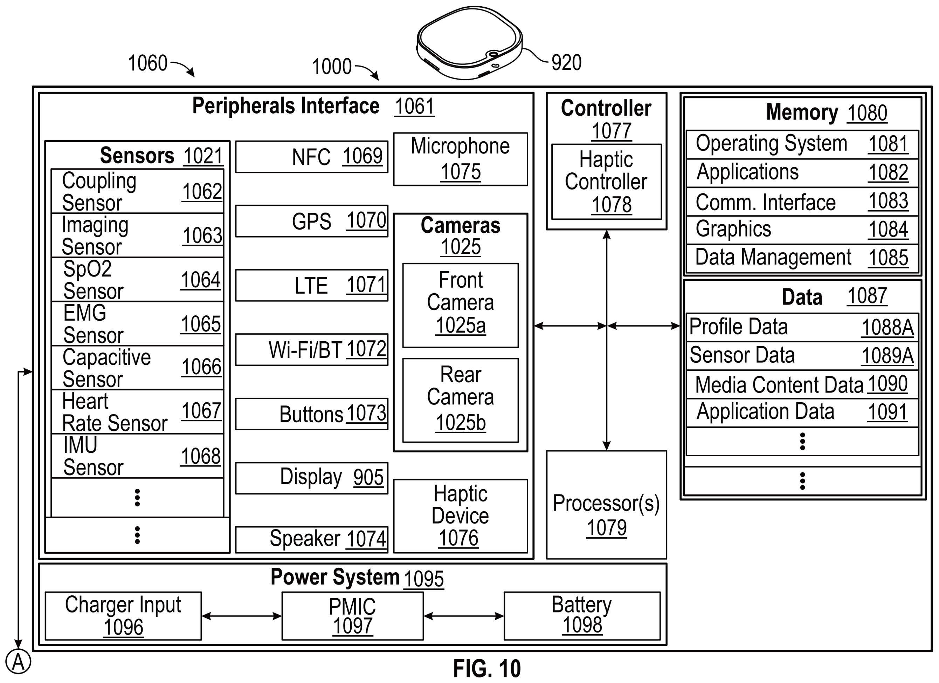

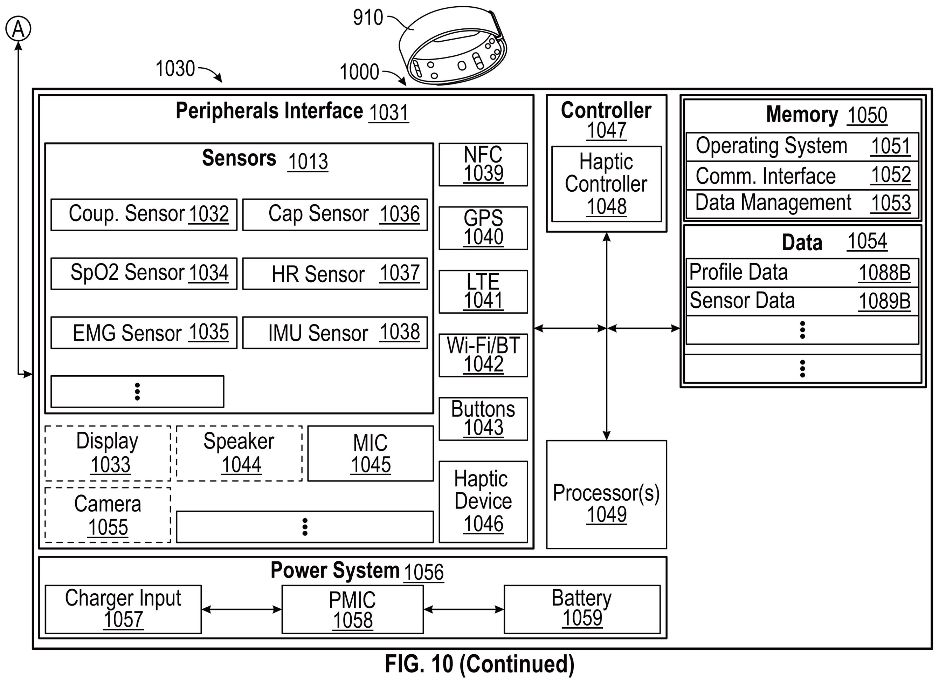

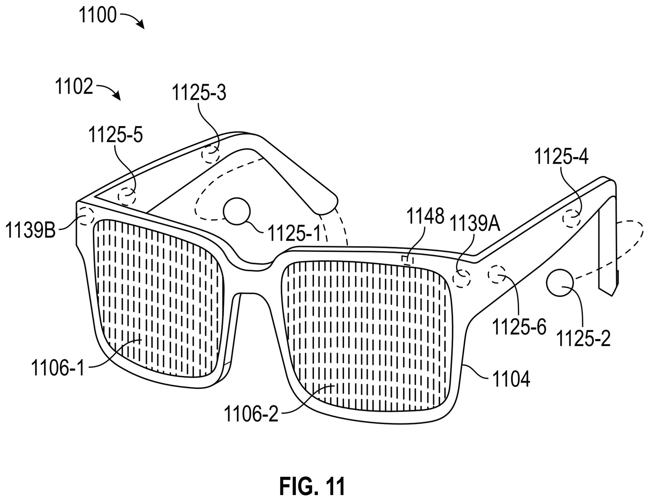

User 508 can use any of wrist-device502, AR glasses 504, and/or HIPD 506 to provide user inputs. For example, user 508 can perform one or more hand gestures that are detected by wrist-device 502, for example, using one or more electro-myography (EMG) sensors and/or inertial measurement units (IMUs), described below in reference to FIGs. 9 and 10) and/or AR glasses 504 (e.g., using one or more image sensor or camera, described below in reference to FIGs. 11-10) to provide a user input. Alternatively, or additionally, user 508 can provide a user input via one or more touch surfaces of wrist-device502, AR glasses 504, HIPD 506, and/or voice commands captured by a microphone of wrist-device502, AR glasses 504, and/or HIPD 506. In some embodiments, wrist-device502, AR glasses 504, and/or HIPD 506 include a digital assistant to help user 508 in providing a user input (e.g., completing a sequence of operations, suggesting different operations or commands, providing reminders, confirming a command, etc.). In some embodiments, user 508 can provide a user input via one or more facial gestures and/or facial expressions. For example, cameras of wrist-device502, AR glasses 504, and/or HIPD 506 can track eyes of user 508 for navigating a user interface.

Wrist-device502, AR glasses 504, and/or HIPD 506 can operate alone or in conjunction to allow user 508 to interact with the AR environment. In some embodiments, HIPD 506 is configured to operate as a central hub or control center for the wrist-device502, AR glasses 504, and/or another communicatively coupled device. For example, user 508 can provide an input to interact with the AR environment at any of wrist-device502, AR glasses 504, and/or HIPD 506, and HIPD 506 can identify one or more back-end and front-end tasks to cause the performance of the requested interaction and distribute instructions to cause the performance of the one or more back-end and front-end tasks at wrist-device502, AR glasses 504, and/or HIPD 506. In some embodiments, a back-end task is a background processing task that is not perceptible by the user (e.g., rendering content, decompression, compression, etc.), and a front-end task is a user-facing task that is perceptible to the user (e.g., presenting information to the user, providing feedback to the user, etc.). HIPD 506 can perform the back-end tasks and provide wrist-device502 and/or AR glasses 504 operational data corresponding to the performed back-end tasks such that wrist-device502 and/or AR glasses 504 can perform the front-end tasks. In this way, HIPD 506, which has more computational resources and greater thermal headroom than wrist-device502 and/or AR glasses 504, performs computationally intensive tasks and reduces the computer resource utilization and/or power usage of wrist-device502 and/or AR glasses 504.

In the example shown by first AR system 500, HIPD 506 identifies one or more back-end tasks and front-end tasks associated with a user request to initiate an AR video call with one or more other users (represented by avatar 510 and the digital representation of contact 512) and distributes instructions to cause the performance of the one or more back-end tasks and front-end tasks. In particular, HIPD 506 performs back-end tasks for processing and/or rendering image data (and other data) associated with the AR video call and provides operational data associated with the performed back-end tasks to AR glasses 504 such that the AR glasses 504 perform front-end tasks for presenting the AR video call (e.g., presenting avatar 510 and digital representation of contact 512).

In some embodiments, HIPD 506 can operate as a focal or anchor point for causing the presentation of information. This allows user 508 to be generally aware of where information is presented. For example, as shown in first AR system 500, avatar 510 and the digital representation of contact 512 are presented above HIPD 506. In particular, HIPD 506 and AR glasses 504 operate in conjunctions to determine a location for presenting avatar 510 and the digital representation of contact 512. In some embodiments, information can be presented at a predetermined distance from HIPD 506 (e.g., within 5 meters). For example, as shown in first AR system 500, virtual object 514 is presented on the desk some distance from HIPD 506. Similar to the above example, HIPD 506 and AR glasses 504 can operate in conjunction to determine a location for presenting virtual object 514. Alternatively, in some embodiments, presentation of information is not bound by HIPD 506. More specifically, avatar 510, digital representation of contact 512, and virtual object 514 do not have to be presented within a predetermined distance of HIPD 506.

User inputs provided at wrist-device502, AR glasses 504, and/or HIPD 506 are coordinated such that the user can use any device to initiate, continue, and/or complete an operation. For example, user 508 can provide a user input to AR glasses 504 to cause AR glasses 504 to present virtual object 514 and, while virtual object 514 is presented by AR glasses 504, user 508 can provide one or more hand gestures via wrist-device502 to interact and/or manipulate virtual object 514.

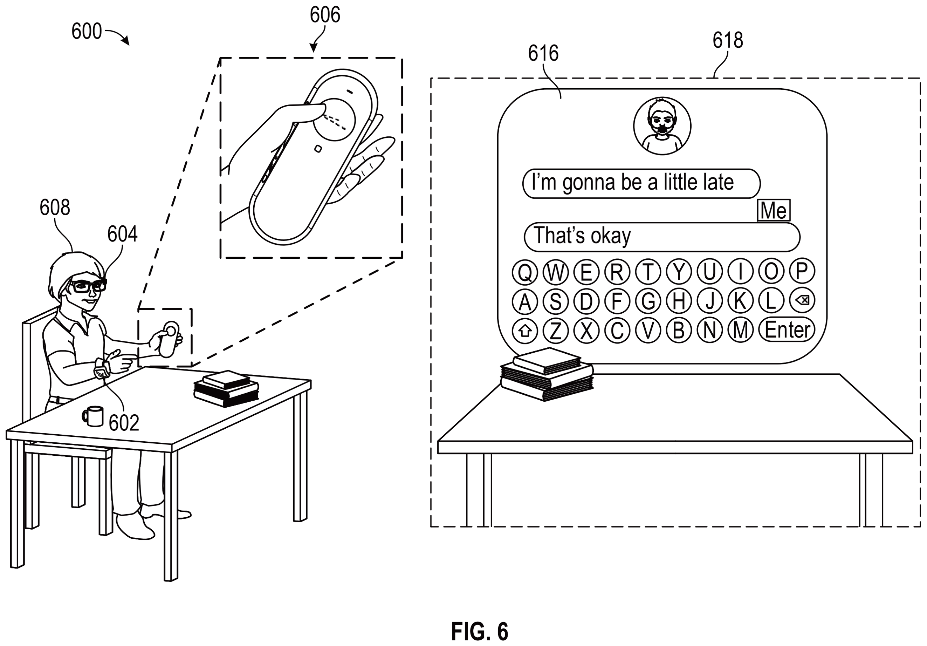

FIG. 6 is a schematic diagram illustrating an example AR system 600 with a handheld device, in accordance with some aspects of the subject technology. The AR system 600 is second example of user interactions using a wrist-device602. A user 608 is wearing a wrist-device602 and AR glasses 604 and holding an HIPD 606. In the second AR system 600, the wrist-device602, AR glasses 604, and/or HIPD 606 are used to receive and/or provide one or more messages to a contact of user 608. In particular, wrist-device602, AR glasses 604, and/or HIPD 606 detect and coordinate one or more user inputs to initiate a messaging application and prepare a response to a received message via the messaging application.

In some embodiments, user 608 initiates, via a user input, an application on wrist-device602, AR glasses 604, and/or HIPD 606 that causes the application to initiate on at least one device. For example, in second AR system 600, user 608 performs a hand gesture associated with a command for initiating a messaging application (represented by messaging user interface 616), wrist-device602 detects the hand gesture and, based on a determination that user 608 is wearing AR glasses 604, causes AR glasses 604 to present a messaging user interface 616 of the messaging application. AR glasses 604 can present messaging user interface 616 to user 608 via its display (e.g., as shown by a field of view 618 of user 608). In some embodiments, the application is initiated and executed on the device (e.g., wrist-device602, AR glasses 604, and/or HIPD 606) that detects the user input to initiate the application, and the device provides another device operational data to cause the presentation of the messaging application. For example, wrist-device602 can detect the user input to initiate a messaging application, initiate and run the messaging application, and provide operational data to AR glasses 604 and/or HIPD 606 to cause presentation of the messaging application. Alternatively, the application can be initiated and executed at a device other than the device that detected the user input. For example, wrist-device602 can detect the hand gesture associated with initiating the messaging application and cause HIPD 606 to run the messaging application and coordinate the presentation of the messaging application.

Further, user 608 can provide a user input provided at wrist-device602, AR glasses 604, and/or HIPD 606 to continue and/or complete an operation initiated at another device. For example, after initiating the messaging application via wrist-device602 and while AR glasses 604 present messaging user interface 616, user 608 can provide an input at HIPD 606 to prepare a response (e.g., shown by the swipe gesture performed on HIPD 606). Gestures performed by user 608 on HIPD 606 can be provided and/or displayed on another device. For example, a swipe gestured performed on HIPD 606 is displayed on a virtual keyboard of messaging user interface 616 displayed by AR glasses 604.

In some embodiments, wrist-device602, AR glasses 604, HIPD 606, and/or any other communicatively coupled device can present one or more notifications to user 608. The notification can be an indication of a new message, an incoming call, an application update, a status update, etc. User 608 can select the notification via wrist-device602, AR glasses 604, and/or HIPD 606 and can cause presentation of an application or operation associated with the notification on at least one device. For example, user 608 can receive a notification that a message was received at wrist-device602, AR glasses 604, HIPD 606, and/or any other communicatively coupled device and can then provide a user input at wrist-device602, AR glasses 604, and/or HIPD 606 to review the notification, and the device detecting the user input can cause an application associated with the notification to be initiated and/or presented at wrist-device602, AR glasses 604, and/or HIPD 606.

While the above example describes coordinated inputs used to interact with a messaging application, user inputs can be coordinated to interact with any number of applications including, but not limited to, gaming applications, social media applications, camera applications, web-based applications, financial applications, etc. For example, AR glasses 604 can present to user 608 game application data, and HIPD 606 can be used as a controller to provide inputs to the game. Similarly, user 608 can use wrist-device602 to initiate a camera of AR glasses 604, and user 308 can use wrist-device602, AR glasses 604, and/or HIPD 606 to manipulate the image capture (e.g., zoom in or out, apply filters, etc.) and capture image data.

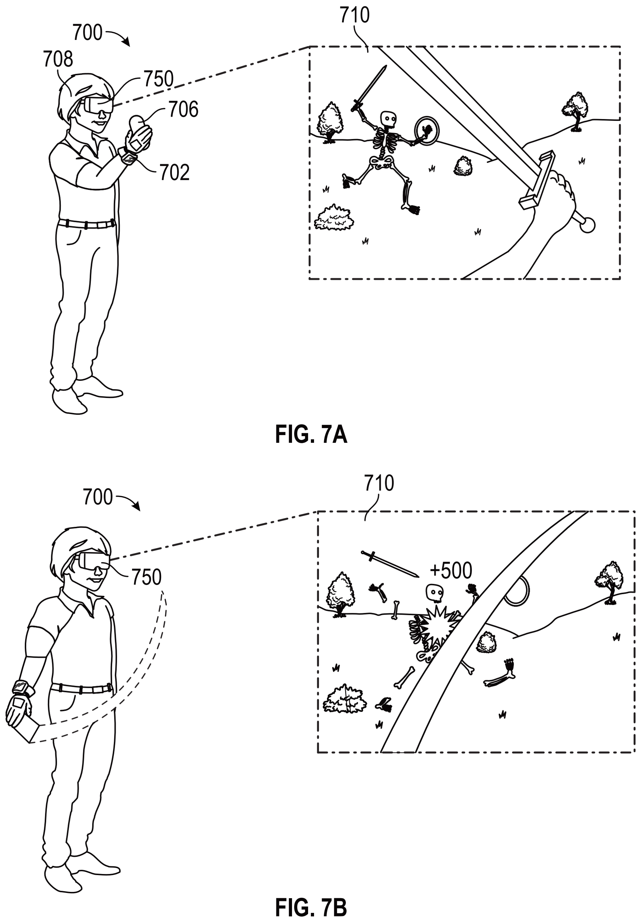

FIG. 7A is a schematic diagram illustrating example user interactions within an artificial-reality system, in accordance with some aspects of the subject technology. FIGS. 7A and 7B show a third AR system 700 and third example user 708 interactions using a wrist-device702, a head-device (e.g., VR headset 750), and/or an HIPD 706.

FIG. 7B is a schematic diagram illustrating example user interactions within an artificial-reality system, in accordance with some aspects of the subject technology.

For example, as shown in FIGs. 7A and 7B, a user 708 may interact with an AR system 700 by donning a VR headset 750 while holding HIPD 706 and wearing wrist-device702. In this example, AR system 700 may enable a user to interact with a game 710 by swiping their arm. One or more of the VR headset 750, HIPD 706, and wrist-device702 may detect this gesture and, in response, may display a sword strike in game 710.

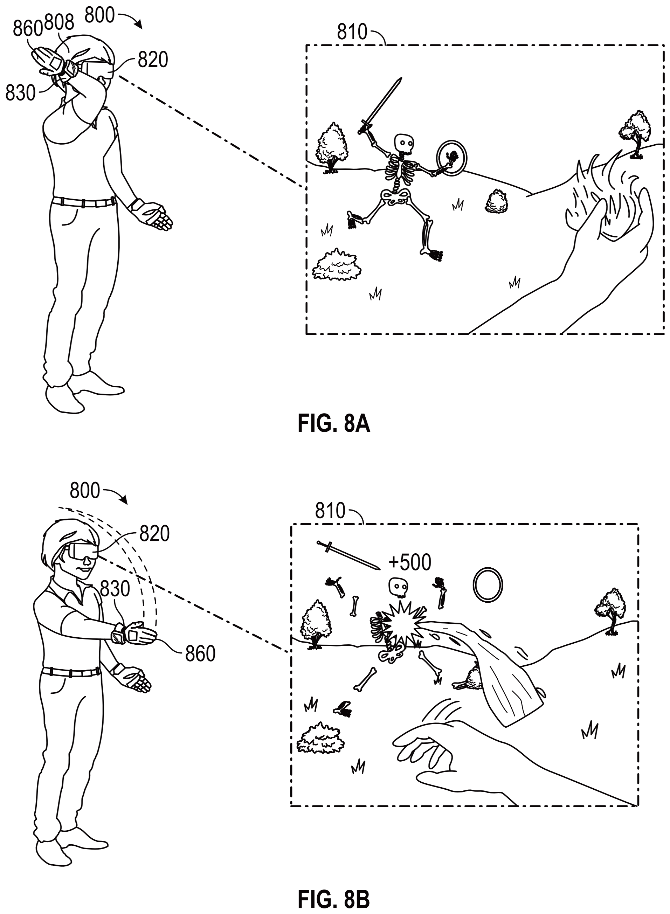

FIG. 8A is a schematic diagram illustrating example user interactions within an AR system, in accordance with some aspects of the subject technology. FIGS. 8A and 8B show a fourth AR system 800 and fourth example user 808 interactions using a wrist-device830, VR headset 820, and/or a haptic device 860 (e.g., wearable gloves).

FIG. 8B is a schematic diagram illustrating example user interactions within an AR system, in accordance with some aspects of the subject technology. In FIGS. 8A and 8B, the user 808 may interact with the AR system 800 by donning a VR headset 820 while wearing haptic device 860 and wrist-device830. In this example, AR system 800 may enable a user to interact with a game 810 by swiping their arm. One or more of the VR headset 820, haptic device 860, and wrist-device830 may detect this gesture and, in response, may display a spell being cast in game 710.

FIG. 9 is a schematic diagram illustrating an example of a wrist-device900 of an AR system, in accordance with some aspects of the subject technology. The wearable band 910 and a watch body 920 (or capsule) are coupled, as discussed below, to form wrist-device900. Wrist-device900 can perform various functions and/or operations associated with navigating through user interfaces and selectively opening applications as well as the functions and/or operations described above with reference to FIGS. 5-8B.

As will be described in more detail below, operations executed by wrist-device900 can include (i) presenting content to a user (e.g., displaying visual content via a display 905), (ii) detecting (e.g., sensing) user input (e.g., sensing a touch on peripheral button 923 and/or at a touch screen of the display 905, a hand gesture detected by sensors (e.g., biopotential sensors)), (iii) sensing biometric data (e.g., neuromuscular signals, heart rate, temperature, sleep, etc.) via one or more sensors 913, messaging (e.g., text, speech, video, etc.); image capture via one or more imaging devices or cameras 925, wireless communications (e.g., cellular, near field, Wi-Fi, personal area network, etc.), location determination, financial transactions, providing haptic feedback, providing alarms, providing notifications, providing biometric authentication, providing health monitoring, providing sleep monitoring, etc.

The above-example functions can be executed independently in watch body 920, independently in wearable band 910, and/or via an electronic communication between watch body 920 and wearable band 910. In some embodiments, functions can be executed on wrist-device900 while an AR environment is being presented (e.g., via one of AR systems 500 to 800). The wearable devices described herein can also be used with other types of AR environments.

Wearable band 910 can be configured to be worn by a user such that an inner surface of a wearable structure 911 of wearable band 910 is in contact with the user's skin. In this example, when worn by a user, sensors 913 may contact the user's skin. In some examples, one or more of sensors 913 can sense biometric data such as a user's heart rate, a saturated oxygen level, temperature, sweat level, neuromuscular signals, or a combination thereof. One or more of sensors 913 can also sense data about a user's environment including a user's motion, altitude, location, orientation, gait, acceleration, position, or a combination thereof. In some embodiment, one or more of sensors 913 can be configured to track a position and/or motion of wearable band 910. One or more of sensors 913 can include any of the sensors defined above and/or discussed below with respect to FIG. 9.

One or more of sensors 913 can be distributed on an inside and/or an outside surface of wearable band 910. In some embodiments, one or more of sensors 913 are uniformly spaced along wearable band 910. Alternatively, in some embodiments, one or more of sensors 913 are positioned at distinct points along wearable band 910. As shown in FIG. 9, one or more of sensors 913 can be the same or distinct. For example, in some embodiments, one or more of sensors 913 can be shaped as a pill (e.g., sensor 913a), an oval, a circle a square, an oblong (e.g., sensor 913c) and/or any other shape that maintains contact with the user's skin (e.g., such that neuromuscular signal and/or other biometric data can be accurately measured at the user's skin). In some embodiments, one or more sensors of 913 are aligned to form pairs of sensors (e.g., for sensing neuromuscular signals based on differential sensing within each respective sensor). For example, sensor 913b may be aligned with an adjacent sensor to form sensor pair 914a and sensor 913d may be aligned with an adjacent sensor to form sensor pair 914b. In some embodiments, wearable band 910 does not have a sensor pair. Alternatively, in some embodiments, wearable band 910 has a predetermined number of sensor pairs (one pair of sensors, three pairs of sensors, four pairs of sensors, six pairs of sensors, sixteen pairs of sensors, etc.).

Wearable band 910 can include any suitable number of sensors 913. In some embodiments, the number and arrangement of sensors 913 depends on the particular application for which wearable band 910 is used. For instance, wearable band 910 can be configured as an armband, wristband, or chest-band that include a plurality of sensors 913 with different number of sensors 913, a variety of types of individual sensors with the plurality of sensors 913, and different arrangements for each use case, such as medical use cases as compared to gaming or general day-to-day use cases.

In accordance with some embodiments, wearable band 910 further includes an electrical ground electrode and a shielding electrode. The electrical ground and shielding electrodes, like the sensors 913, can be distributed on the inside surface of the wearable band 910 such that they contact a portion of the user's skin. For example, the electrical ground and shielding electrodes can be at an inside surface of a coupling mechanism 916 or an inside surface of a wearable structure 911. The electrical ground and shielding electrodes can be formed and/or use the same components as sensors 913. In some embodiments, wearable band 910 includes more than one electrical ground electrode and more than one shielding electrode.

Sensors 913 can be formed as part of wearable structure 911 of wearable band 910. In some embodiments, sensors 913 are flush or substantially flush with wearable structure 911 such that they do not extend beyond the surface of wearable structure 911. While flush with wearable structure 911, sensors 913 are still configured to contact the user's skin (e.g., via a skin-contacting surface). Alternatively, in some embodiments, sensors 913 extend beyond wearable structure 911 a predetermined distance (e.g., 0.1 - 2 mm) to make contact and depress into the user's skin. In some embodiment, sensors 913 are coupled to an actuator (not shown) configured to adjust an extension height (e.g., a distance from the surface of wearable structure 911) of sensors 913 such that sensors 913 make contact and depress into the user's skin. In some embodiments, the actuators adjust the extension height between 0.01 mm - 1.2 mm. This may allow the user to customize the positioning of sensors 913 to improve the overall comfort of the wearable band 910 when worn while still allowing sensors 913 to contact the user's skin. In some embodiments, sensors 913 are indistinguishable from wearable structure 911 when worn by the user.

Wearable structure 911 can be formed of an elastic material, elastomers, etc., configured to be stretched and fitted to be worn by the user. In some embodiments, wearable structure 911 is a textile or woven fabric. As described above, sensors 913 can be formed as part of a wearable structure 911. For example, sensors 913 can be molded into the wearable structure 911, be integrated into a woven fabric (e.g., sensors 913 can be sewn into the fabric and mimic the pliability of fabric and can and/or be constructed from a series woven strands of fabric).

Wearable structure 911 can include flexible electronic connectors that interconnect sensors 913, the electronic circuitry, and/or other electronic components (described below in reference to FIG. 10) that are enclosed in wearable band 910. In some embodiments, the flexible electronic connectors are configured to interconnect sensors 913, the electronic circuitry, and/or other electronic components of wearable band 910 with respective sensors and/or other electronic components of another electronic device (e.g., watch body 920). The flexible electronic connectors are configured to move with wearable structure 911 such that the user adjustment to wearable structure 911 (e.g., resizing, pulling, folding, etc.) does not stress or strain the electrical coupling of components of wearable band 910.

As described above, wearable band 910 is configured to be worn by a user. In particular, wearable band 910 can be shaped or otherwise manipulated to be worn by a user. For example, wearable band 910 can be shaped to have a substantially circular shape such that it can be configured to be worn on the user's lower arm or wrist. Alternatively, wearable band 910 can be shaped to be worn on another body part of the user, such as the user's upper arm (e.g., around a bicep), forearm, chest, legs, etc. Wearable band 910 can include a retaining mechanism 912 (e.g., a buckle, a hook and loop fastener, etc.) for securing wearable band 910 to the user's wrist or other body part. While wearable band 910 is worn by the user, sensors 913 sense data (referred to as sensor data) from the user's skin. In some examples, sensors 913 of wearable band 910 obtain (e.g., sense and record) neuromuscular signals.

The sensed data (e.g., sensed neuromuscular signals) can be used to detect and/or determine the user's intention to perform certain motor actions. In some examples, sensors 913 may sense and record neuromuscular signals from the user as the user performs muscular activations (e.g., movements, gestures, etc.). The detected and/or determined motor actions (e.g., phalange (or digit) movements, wrist movements, hand movements, and/or other muscle intentions) can be used to determine control commands or control information (instructions to perform certain commands after the data is sensed) for causing a computing device to perform one or more input commands. For example, the sensed neuromuscular signals can be used to control certain user interfaces displayed on display 905 of wrist-device900 and/or can be transmitted to a device responsible for rendering an artificial-reality environment (e.g., a head-mounted display) to perform an action in an associated artificial-reality environment, such as to control the motion of a virtual device displayed to the user. The muscular activations performed by the user can include static gestures, such as placing the user's hand palm down on a table, dynamic gestures, such as grasping a physical or virtual object, and covert gestures that are imperceptible to another person, such as slightly tensing a joint by co-contracting opposing muscles or using sub-muscular activations. The muscular activations performed by the user can include symbolic gestures (e.g., gestures mapped to other gestures, interactions, or commands, for example, based on a gesture vocabulary that specifies the mapping of gestures to commands).

The sensor data sensed by sensors 913 can be used to provide a user with an enhanced interaction with a physical object (e.g., devices communicatively coupled with wearable band 910) and/or a virtual object in an artificial-reality application generated by an artificial-reality system (e.g., user interface objects presented on the display 905, or another computing device (e.g., a smartphone)).

In some embodiments, wearable band 910 includes one or more haptic devices 1046 (e.g., a vibratory haptic actuator) that are configured to provide haptic feedback (e.g., a cutaneous and/or kinesthetic sensation, etc.) to the user's skin. Sensors 913 and/or haptic devices 1046 (shown in FIG. 10) can be configured to operate in conjunction with multiple applications including, without limitation, health monitoring, social media, games, and artificial reality (e.g., the applications associated with artificial reality).

Wearable band 910 can also include coupling mechanism 916 for detachably coupling a capsule (e.g., a computing unit) or watch body 920 (via a coupling surface of the watch body 920) to wearable band 910. For example, a cradle or a shape of coupling mechanism 916 can correspond to shape of watch body 920 of wrist-device900. In particular, coupling mechanism 916 can be configured to receive a coupling surface proximate to the bottom side of watch body 920 (e.g., a side opposite to a front side of watch body 920 where display 905 is located), such that a user can push watch body 920 downward into coupling mechanism 916 to attach watch body 920 to coupling mechanism 916. In some embodiments, coupling mechanism 916 can be configured to receive a top side of the watch body 920 (e.g., a side proximate to the front side of watch body 920 where display 905 is located) that is pushed upward into the cradle, as opposed to being pushed downward into coupling mechanism 916. In some embodiments, coupling mechanism 916 is an integrated component of wearable band 910 such that wearable band 910 and coupling mechanism 916 are a single unitary structure. In some embodiments, coupling mechanism 916 is a type of frame or shell that allows watch body 920 coupling surface to be retained within or on wearable band 910 coupling mechanism 916 (e.g., a cradle, a tracker band, a support base, a clasp, etc.).

Coupling mechanism 916 can allow for watch body 920 to be detachably coupled to the wearable band 910 through a friction fit, magnetic coupling, a rotation-based connector, a shear-pin coupler, a retention spring, one or more magnets, a clip, a pin shaft, a hook and loop fastener, or a combination thereof. A user can perform any type of motion to couple the watch body 920 to wearable band 910 and to decouple the watch body 920 from the wearable band 910. For example, a user can twist, slide, turn, push, pull, or rotate watch body 920 relative to wearable band 910, or a combination thereof, to attach watch body 920 to wearable band 910 and to detach watch body 920 from wearable band 910. Alternatively, as discussed below, in some embodiments, the watch body 920 can be decoupled from the wearable band 910 by actuation of a release mechanism 929.

Wearable band 910 can be coupled with watch body 920 to increase the functionality of wearable band 910 (e.g., converting wearable band 910 into wrist-device900, adding an additional computing unit and/or battery to increase computational resources and/or a battery life of wearable band 910, adding additional sensors to improve sensed data, etc.). As described above, wearable band 910 and coupling mechanism 916 are configured to operate independently (e.g., execute functions independently) from watch body 920. For example, coupling mechanism 916 can include one or more sensors 913 that contact a user's skin when wearable band 910 is worn by the user, with or without watch body 920 and can provide sensor data for determining control commands.

A user can detach watch body 920 from wearable band 910 to reduce the encumbrance of wrist-device 900 to the user. For embodiments in which watch body 920 is removable, watch body 920 can be referred to as a removable structure, such that in these embodiments wrist-device900 includes a wearable portion (e.g., wearable band 910) and a removable structure (e.g., watch body 920).

Turning to watch body 920, in some examples watch body 920 can have a substantially rectangular or circular shape. Watch body 920 is configured to be worn by the user on their wrist or on another body part. More specifically, watch body 920 is sized to be easily carried by the user, attached on a portion of the user's clothing, and/or coupled to wearable band 910 (forming the wrist-device900). As described above, watch body 920 can have a shape corresponding to coupling mechanism 916 of wearable band 910. In some embodiments, watch body 920 includes a single release mechanism 929 or multiple release mechanisms (e.g., two release mechanisms 929 positioned on opposing sides of watch body 920, such as spring-loaded buttons) for decoupling watch body 920 from wearable band 910. Release mechanism 929 can include, without limitation, a button, a knob, a plunger, a handle, a lever, a fastener, a clasp, a dial, a latch, or a combination thereof.

A user can actuate release mechanism 929 by pushing, turning, lifting, depressing, shifting, or performing other actions on release mechanism 929. Actuation of release mechanism 929 can release (e.g., decouple) watch body 920 from coupling mechanism 916 of wearable band 910, allowing the user to use watch body 920 independently from wearable band 910 and vice versa. For example, decoupling watch body 920 from wearable band 910 can allow a user to capture images using rear-facing camera 925b. Although release mechanism 929 is shown positioned at a corner of watch body 920, release mechanism 929 can be positioned anywhere on watch body 920 that is convenient for the user to actuate. In addition, in some embodiments, wearable band 910 can also include a respective release mechanism for decoupling watch body 920 from coupling mechanism 916. In some embodiments, release mechanism 929 is optional and watch body 920 can be decoupled from coupling mechanism 916 as described above (e.g., via twisting, rotating, etc.).

Watch body 920 can include one or more peripheral buttons 923 and 927 for performing various operations at watch body 920. For example, peripheral buttons 923 and 927 can be used to turn on or wake (e.g., transition from a sleep state to an active state) display 905, unlock watch body 920, increase or decrease a volume, increase or decrease a brightness, interact with one or more applications, interact with one or more user interfaces, etc. Additionally or alternatively, in some embodiments, display 905 operates as a touch screen and allows the user to provide one or more inputs for interacting with watch body 920.

In some embodiments, watch body 920 includes one or more sensors 921. Sensors 921 of watch body 920 can be the same or distinct from sensors 913 of wearable band 910. Sensors 921 of watch body 920 can be distributed on an inside and/or an outside surface of watch body 920. In some embodiments, sensors 921 are configured to contact a user's skin when watch body 920 is worn by the user. For example, sensors 921 can be placed on the bottom side of watch body 920 and coupling mechanism 916 can be a cradle with an opening that allows the bottom side of watch body 920 to directly contact the user's skin. Alternatively, in some embodiments, watch body 920 does not include sensors that are configured to contact the user's skin (e.g., including sensors internal and/or external to the watch body 920 that are configured to sense data of watch body 920 and the surrounding environment). In some embodiments, sensors 921 are configured to track a position and/or motion of watch body 920.

Watch body 920 and wearable band 910 can share data using a wired communication method (e.g., a Universal Asynchronous Receiver/Transmitter (UART), a USB transceiver, etc.) and/or a wireless communication method (e.g., near field communication, Bluetooth, etc.). For example, watch body 920 and wearable band 910 can share data sensed by sensors 913 and 921, as well as application and device specific information (e.g., active and/or available applications, output devices (e.g., displays, speakers, etc.), input devices (e.g., touch screens, microphones, imaging sensors, etc.).

In some embodiments, watch body 920 can include, without limitation, a front-facing camera 925a and/or a rear-facing camera 925b, sensors 921 (e.g., a biometric sensor, an IMU, a heart rate sensor, a saturated oxygen sensor, a neuromuscular signal sensor, an altimeter sensor, a temperature sensor, a bioimpedance sensor, a pedometer sensor, an optical sensor (e.g., imaging sensor 1063), a touch sensor, a sweat sensor, etc.). In some embodiments, watch body 920 can include one or more haptic devices 1076 (e.g., a vibratory haptic actuator) that is configured to provide haptic feedback (e.g., a cutaneous and/or kinesthetic sensation, etc.) to the user. Sensors 1021 and/or haptic device 1076 can also be configured to operate in conjunction with multiple applications including, without limitation, health monitoring applications, social media applications, game applications, and artificial reality applications (e.g., the applications associated with artificial reality).

As described above, watch body 920 and wearable band 910, when coupled, can form wrist-device 900. When coupled, watch body 920 and wearable band 910 may operate as a single device to execute functions (operations, detections, communications, etc.) described herein. In some embodiments, each device may be provided with particular instructions for performing the one or more operations of wrist-device900. For example, in accordance with a determination that watch body 920 does not include neuromuscular signal sensors, wearable band 910 can include alternative instructions for performing associated instructions (e.g., providing sensed neuromuscular signal data to watch body 920 via a different electronic device). Operations of wrist-device900 can be performed by watch body 920 alone or in conjunction with wearable band 910 (e.g., via respective processors and/or hardware components) and vice versa. In some embodiments, operations of wrist-device900, watch body 920, and/or wearable band 910 can be performed in conjunction with one or more processors and/or hardware components.

As described below with reference to the block diagram of FIG. 10, wearable band 910 and/or watch body 920 can each include independent resources required to independently execute functions. For example, wearable band 910 and/or watch body 920 can each include a power source (e.g., a battery), a memory, data storage, a processor (e.g., a central processing unit (CPU)), communications, a light source, and/or input/output devices.

FIG. 10 is a block diagram illustrating an example of a wearable artificial-reality system 1000, in accordance with some aspects of the subject technology. The block diagram of a computing system 1000 include a block diagram corresponding to wearable band 910 and a computing system 1060 corresponding to watch body 920 according to some embodiments. Computing system 1000 of wrist-device900 may include a combination of components of wearable band computing system 1030 and watch body computing system 1060, in accordance with some embodiments.

Watch body 920 and/or wearable band 910 can include one or more components shown in watch body computing system 1060. In some embodiments, a single integrated circuit may include all or a substantial portion of the components of watch body computing system 1060 included in a single integrated circuit. Alternatively, in some embodiments, components of the watch body computing system 1060 may be included in a plurality of integrated circuits that are communicatively coupled. In some embodiments, watch body computing system 1060 may be configured to couple (e.g., via a wired or wireless connection) with wearable band computing system 1030, which may allow the computing systems to share components, distribute tasks, and/or perform other operations described herein (individually or as a single device). Watch body computing system 1060 can include one or more processors 1079, a controller 1077, a peripherals interface 1061, a power system 1095, and memory (e.g., a memory 1080).

Power system 1095 can include a charger input 1096, a power-management integrated circuit (PMIC) 1097, and a battery 1098. In some embodiments, a watch body 920 and a wearable band 910 can have respective batteries (e.g., battery 1098 and 1059) and can share power with each other. Watch body 920 and wearable band 910 can receive a charge using a variety of techniques. In some embodiments, watch body 920 and wearable band 910 can use a wired charging assembly (e.g., power cords) to receive the charge. Alternatively, or in addition, watch body 920 and/or wearable band 910 can be configured for wireless charging. For example, a portable charging device can be designed to mate with a portion of watch body 920 and/or wearable band 910 and wirelessly deliver usable power to battery 1098 of watch body 920 and/or battery 1059 of wearable band 910. Watch body 920 and wearable band 910 can have independent power systems (e.g., power system 1095 and 1056, respectively) to enable each to operate independently. Watch body 920 and wearable band 910 can also share power (e.g., one can charge the other) via respective PMICs (e.g., PMICs 1097 and 1058) and charger inputs (e.g., 1057 and 1096) that can share power over power and ground conductors and/or over wireless charging antennas.

In some embodiments, peripherals interface 1061 can include one or more sensors 1021. Sensors 1021 can include one or more coupling sensors 1062 for detecting when watch body 920 is coupled with another electronic device (e.g., a wearable band 910). Sensors 1021 can include one or more imaging sensors 1063 (e.g., one or more of cameras 1025, and/or separate imaging sensors 1063 such as thermal-imaging sensors). In some embodiments, sensors 1021 can include one or more SpO2 sensors 1064. In some embodiments, sensors 1021 can include one or more biopotential-signal sensors (e.g., EMG sensors 1065, which may be disposed on an interior, user-facing portion of watch body 920 and/or wearable band 910). In some embodiments, sensors 1021 may include one or more capacitive sensors 1066. In some embodiments, sensors 1021 may include one or more heart rate sensors 1067. In some embodiments, sensors 1021 may include one or more IMU sensors 1068. In some embodiments, one or more IMU sensors 1068 can be configured to detect movement of a user's hand or other location where watch body 920 is placed or held.

In some embodiments, one or more of sensors 1021 may provide an example human-machine interface. For example, a set of neuromuscular sensors, such as EMG sensors 1065, may be arranged circumferentially around wearable band 910 with an interior surface of EMG sensors 1065 being configured to contact a user's skin. Any suitable number of neuromuscular sensors may be used (e.g., between 2 and 20 sensors). The number and arrangement of neuromuscular sensors may depend on the particular application for which the device is used. For example, wearable band 910 can be used to generate control information for controlling an augmented reality system, a robot, controlling a vehicle, scrolling through text, controlling a virtual avatar, or any other suitable control task.

In some embodiments, neuromuscular sensors may be coupled together using flexible electronics incorporated into the wireless device, and the output of one or more of the sensing components can be optionally processed using hardware signal processing circuitry (e.g., to perform amplification, filtering, and/or rectification). In other embodiments, at least some signal processing of the output of the sensing components can be performed in software such as processors 1079. Thus, signal processing of signals sampled by the sensors can be performed in hardware, software, or by any suitable combination of hardware and software, as aspects of the technology described herein are not limited in this respect.

Neuromuscular signals may be processed in a variety of ways. For example, the output of EMG sensors 1065 may be provided to an analog front end, which may be configured to perform analog processing (e.g., amplification, noise reduction, filtering, etc.) on the recorded signals. The processed analog signals may then be provided to an analog-to-digital converter, which may convert the analog signals to digital signals that can be processed by one or more computer processors. Furthermore, although this example is as discussed in the context of interfaces with EMG sensors, the embodiments described herein can also be implemented in wearable interfaces with other types of sensors including, but not limited to, mechanomyography (MMG) sensors, sonomyography (SMG) sensors, and electrical impedance tomography (EIT) sensors.

In some embodiments, peripherals interface 1061 includes a near-field communication (NFC) component 1069, a global-position system (GPS) component 1070, a long-term evolution (LTE) component 1071, and/or a Wi-Fi and/or Bluetooth communication component 1072. In some embodiments, peripherals interface 1061 includes one or more buttons 1073 (e.g., peripheral buttons 923 and 927 in FIG. 9), which, when selected by a user, cause operation to be performed at watch body 920. In some embodiments, the peripherals interface 1061 includes one or more indicators, such as a light emitting diode (LED), to provide a user with visual indicators (e.g., message received, low battery, active microphone and/or camera, etc.).

Watch body 920 can include at least one display 905 for displaying visual representations of information or data to a user, including user-interface elements and/or three-dimensional virtual objects. The display can also include a touch screen for inputting user inputs, such as touch gestures, swipe gestures, and the like. Watch body 920 can include at least one speaker 1074 and at least one microphone 1075 for providing audio signals to the user and receiving audio input from the user. The user can provide user inputs through microphone 1075 and can also receive audio output from speaker 1074 as part of a haptic event provided by haptic controller 1078. Watch body 920 can include at least one camera 1025, including a front camera 1025a and a rear camera 1025b. Cameras 1025 can include ultra-wide-angle cameras, wide angle cameras, fish-eye cameras, spherical cameras, telephoto cameras, depth-sensing cameras, or other types of cameras.

Watch body computing system 1060 can include one or more haptic controllers 1078 and associated componentry (e.g., haptic devices 1076) for providing haptic events at watch body 920 (e.g., a vibrating sensation or audio output in response to an event at the watch body 920). Haptic controllers 1078 can communicate with one or more haptic devices 1076, such as electroacoustic devices, including a speaker of the one or more speakers 1074 and/or other audio components and/or electromechanical devices that convert energy into linear motion such as a motor, solenoid, electroactive polymer, piezoelectric actuator, electrostatic actuator, or other tactile output generating components (e.g., a component that converts electrical signals into tactile outputs on the device). Haptic controller 1078 can provide haptic events to that are capable of being sensed by a user of watch body 920. In some embodiments, one or more haptic controllers 1078 can receive input signals from an application of applications 1082.

In some embodiments, wearable band computing system 1030 and/or watch body computing system 1060 can include memory 1080, which can be controlled by one or more memory controllers of controllers 1077. In some embodiments, software components stored in memory 1080 include one or more applications 1082 configured to perform operations at the watch body 920. In some embodiments, one or more applications 1082 may include games, word processors, messaging applications, calling applications, web browsers, social media applications, media streaming applications, financial applications, calendars, clocks, etc. In some embodiments, software components stored in memory 1080 include one or more communication interface modules 1083 as defined above. In some embodiments, software components stored in memory 1080 include one or more graphics modules 1084 for rendering, encoding, and/or decoding audio and/or visual data and one or more data management modules 1085 for collecting, organizing, and/or providing access to data 1087 stored in memory 1080. In some embodiments, one or more of applications 1082 and/or one or more modules can work in conjunction with one another to perform various tasks at the watch body 920.

In some embodiments, software components stored in memory 1080 can include one or more operating systems 1081 (e.g., a Linux-based operating system, an Android operating system, etc.). Memory 1080 can also include data 1087. Data 1087 can include profile data 1088A, sensor data 1089A, media content data 1090, and application data 1091.

It should be appreciated that watch body computing system 1060 is an example of a computing system within watch body 920, and that watch body 920 can have more or fewer components than shown in watch body computing system 1060, can combine two or more components, and/or can have a different configuration and/or arrangement of the components. The various components shown in watch body computing system 1060 are implemented in hardware, software, firmware, or a combination thereof, including one or more signal processing and/or application-specific integrated circuits.

Turning to the wearable band computing system 1030, one or more components that can be included in wearable band 910 are shown. Wearable band computing system 1030 can include more or fewer components than shown in watch body computing system 1060, can combine two or more components, and/or can have a different configuration and/or arrangement of some or all of the components. In some embodiments, all, or a substantial portion of the components of wearable band computing system 1030 are included in a single integrated circuit. Alternatively, in some embodiments, components of wearable band computing system 1030 are included in a plurality of integrated circuits that are communicatively coupled. As described above, in some embodiments, wearable band computing system 1030 is configured to couple (e.g., via a wired or wireless connection) with watch body computing system 1060, which allows the computing systems to share components, distribute tasks, and/or perform other operations described herein (individually or as a single device).

Wearable band computing system 1030, similar to watch body computing system 1060, can include one or more processors 1049, one or more controllers 1047 (including one or more haptics controllers 1048), a peripherals interface 1031 that can includes one or more sensors 1013 and other peripheral devices, a power source (e.g., a power system 1056), and memory (e.g., a memory 1050) that includes an operating system (e.g., an operating system 1051), data (e.g., data 1054 including profile data 1088B, sensor data 1089B, etc.), and one or more modules (e.g., a communications interface module 1052, a data management module 1053, etc.).

One or more of sensors 1013 can be analogous to sensors 1021 of watch body computing system 1060. For example, sensors 1013 can include one or more coupling sensors 1032, one or more SpO2 sensors 1034, one or more EMG sensors 1035, one or more capacitive sensors 1036, one or more heart rate sensors 1037, and one or more IMU sensors 1038.

Peripherals interface 1031 can also include other components analogous to those included in peripherals interface 1061 of watch body computing system 1060, including an NFC component 1039, a GPS component 1040, an LTE component 1041, a Wi-Fi and/or Bluetooth communication component 1042, and/or one or more haptic devices 1046 as described above in reference to peripherals interface 1061. In some embodiments, peripherals interface 1031 includes one or more buttons 1043, a display 1033, a speaker 1044, a microphone 1045, and a camera 1055. In some embodiments, peripherals interface 1031 includes one or more indicators, such as an LED.

It should be appreciated that wearable band computing system 1030 is an example of a computing system within wearable band 910, and that wearable band 910 can have more or fewer components than shown in wearable band computing system 1030, combine two or more components, and/or have a different configuration and/or arrangement of the components. The various components shown in wearable band computing system 1030 can be implemented in one or more of a combination of hardware, software, or firmware, including one or more signal processing and/or application-specific integrated circuits.

Wrist-device 900 with respect to FIG. 9 is an example of wearable band 910 and watch body 920 coupled together, so wrist-device900 will be understood to include the components shown and described for wearable band computing system 1030 and watch body computing system 1060. In some embodiments, wrist-device 900 has a split architecture (e.g., a split mechanical architecture, a split electrical architecture, etc.) between watch body 920 and wearable band 910. In other words, all of the components shown in wearable band computing system 1030 and watch body computing system 1060 can be housed or otherwise disposed in a combined wrist-device900 or within individual components of watch body 920, wearable band 910, and/or portions thereof (e.g., a coupling mechanism 916 of wearable band 910).

The techniques described above can be used with any device for sensing neuromuscular signals but could also be used with other types of wearable devices for sensing neuromuscular signals (such as body-wearable or head-wearable devices that might have neuromuscular sensors closer to the brain or spinal column).

In some embodiments, wrist-device900 can be used in conjunction with a head-device(e.g., AR glasses 1100 and VR system 1210) and/or an HIPD, and wrist-device900 can also be configured to be used to allow a user to control any aspect of the artificial reality (e.g., by using EMG-based gestures to control user interface objects in the artificial reality and/or by allowing a user to interact with the touchscreen on the wrist-device to also control aspects of the artificial reality). Having thus described example wrist-wearable devices, attention will now be turned to example head-wearable devices, such AR glasses 1100 and VR headset 1210.

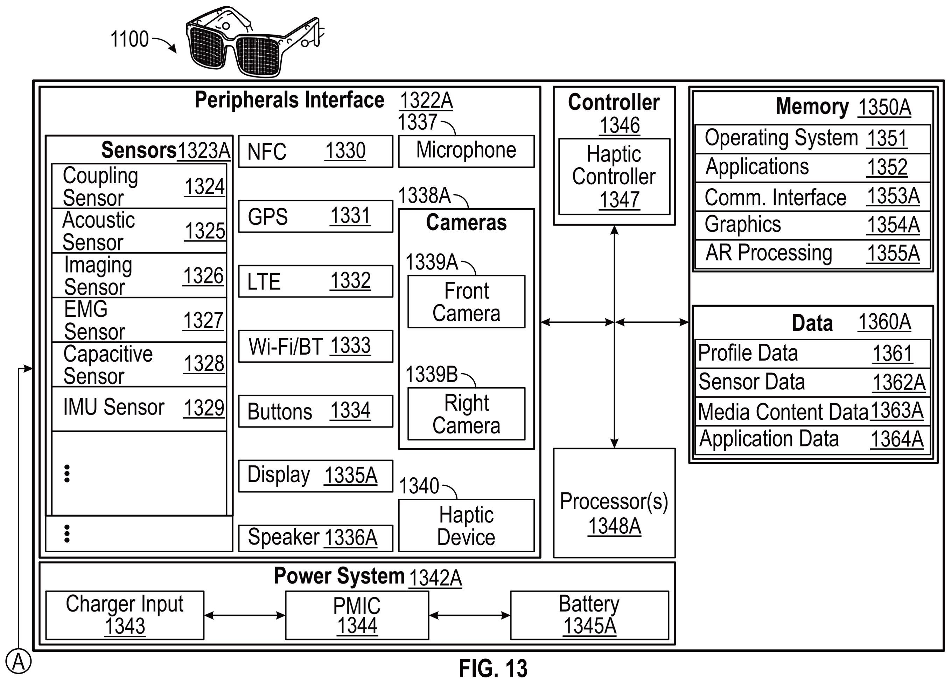

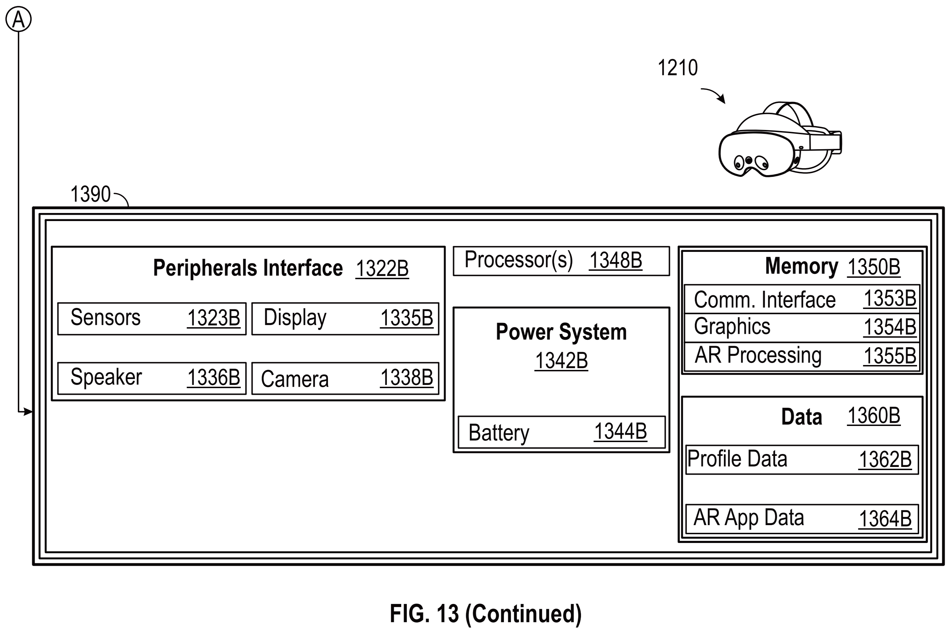

FIG. 11 is a schematic diagram illustrating an example of an AR system 1100, in accordance with some aspects of the subject technology. The example visual depiction of AR system 1100, includes an eyewear device 1102 (which may also be described herein as augmented-reality glasses, and/or smart glasses). AR system 1100 can include additional electronic components that are not shown in FIG. 11, such as a wearable accessory device and/or an intermediary processing device, in electronic communication or otherwise configured to be used in conjunction with the eyewear device 1102. In some embodiments, the wearable accessory device and/or the intermediary processing device may be configured to couple with eyewear device 1102 via a coupling mechanism in electronic communication with a coupling sensor 1324 (FIG. 13), where coupling sensor 1324 can detect when an electronic device becomes physically or electronically coupled with eyewear device 1102. In some embodiments, eyewear device 1102 can be configured to couple to a housing 1390 (FIG. 13), which may include one or more additional coupling mechanisms configured to couple with additional accessory devices. The components shown in FIG. 11 can be implemented in hardware, software, firmware, or a combination thereof, including one or more signal-processing components and/or application-specific integrated circuits (ASICs).

Eyewear device 1102 includes mechanical glasses components, including a frame 1104 configured to hold one or more lenses (e.g., one or both lenses 1106-1 and 1106-2). One of ordinary skill in the art will appreciate that eyewear device 1102 can include additional mechanical components, such as hinges configured to allow portions of frame 1104 of eyewear device 1102 to be folded and unfolded, a bridge configured to span the gap between lenses 1106-1 and 1106-2 and rest on the user's nose, nose pads configured to rest on the bridge of the nose and provide support for eyewear device 1102, earpieces configured to rest on the user's ears and provide additional support for eyewear device 1102, temple arms configured to extend from the hinges to the earpieces of eyewear device 1102, and the like. One of ordinary skill in the art will further appreciate that some examples of AR system 1100 can include none of the mechanical components described herein. For example, smart contact lenses configured to present artificial reality to users may not include any components of eyewear device 1102.

Eyewear device 1102 includes electronic components, many of which will be described in more detail below with respect to FIG. 13. Some example electronic components are illustrated in FIG. 11, including acoustic sensors 1125-1, 1125-2, 1125-3, 1125-4, 1125-5, and 1125-6, which can be distributed along a substantial portion of the frame 1104 of eyewear device 1102. Eyewear device 1102 also includes a left camera 1139A and a right camera 1139B, which are located on different sides of the frame 1104. Eyewear device 1102 also includes a processor 1148 (or any other suitable type or form of integrated circuit) that is embedded into a portion of the frame 1104.

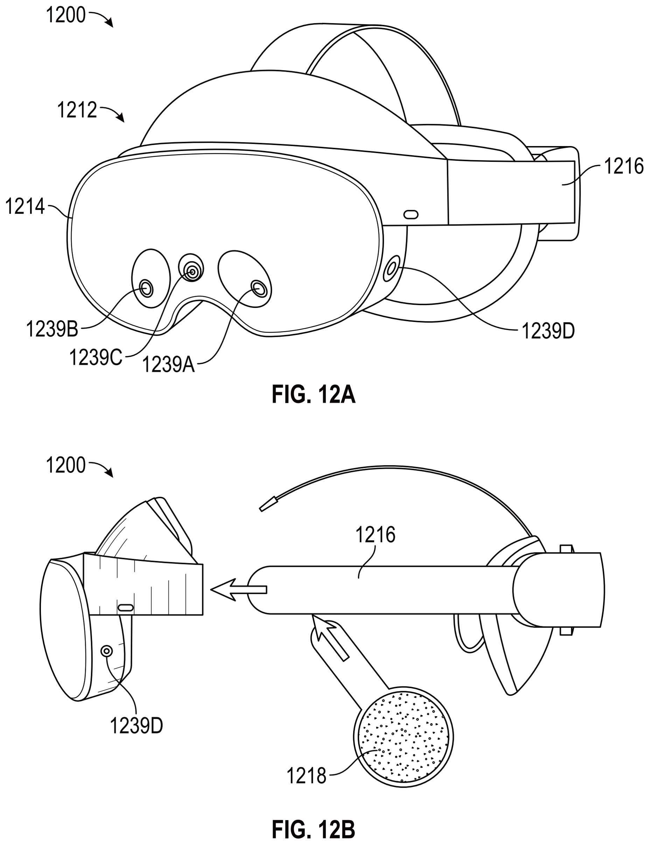

FIG. 12A is a schematic diagram illustrating an example of a VR system 1200, in accordance with some aspects of the subject technology. FIG. 12B is a schematic diagram illustrating another example of the VR systems 1200 shown in FIG. 12A. The VR system 1200 ass shown in FIGs. 12A and 12B includes a head-mounted display (HMD) 1212 (e.g., also referred to herein as an artificial-reality headset, a head-wearable device, a VR headset, etc.), in accordance with some embodiments. As noted, some artificial-reality systems (e.g., AR system 1100) may, instead of blending an artificial reality with actual reality, substantially replace one or more of a user's visual and/or other sensory perceptions of the real world with a virtual experience (e.g., AR systems 700 and 800).

HMD 1212 includes a front body 1214 and a frame 1216 (e.g., a strap or band) shaped to fit around a user's head. In some embodiments, front body 1214 and/or frame 1216 include one or more electronic elements for facilitating presentation of and/or interactions with an AR and/or VR system (e.g., displays, IMUs, tracking emitter or detectors). In some embodiments, HMD 1212 includes output audio transducers (e.g., an audio transducer 1218), as shown in FIG. 12B. In some embodiments, one or more components, such as the output audio transducer(s) 1218 and frame 1216, can be configured to attach and detach (e.g., are detachably attachable) to HMD 1212 (e.g., a portion or all of frame 1216, and/or audio transducer 1218), as shown in FIG. 12B. In some embodiments, coupling a detachable component to HMD 1212 causes the detachable component to come into electronic communication with HMD 1212.

FIGS. 12A and 12B also show that VR system 1210 includes one or more cameras, such as left camera 1239A and right camera 1239B, which can be analogous to left and right cameras 1139A and 1139B on frame 1104 of eyewear device 1102. In some embodiments, VR system 1210 includes one or more additional cameras (e.g., cameras 1239C and 1239D), which can be configured to augment image data obtained by left and right cameras 1239A and 1239B by providing more information. For example, camera 1239C can be used to supply color information that is not discerned by cameras 1239A and 1239B. In some embodiments, one or more of cameras 1239A to 1239D can include an optional IR cut filter configured to remove IR light from being received at the respective camera sensors.

FIG. 13 is a block diagram illustrating an example of system components of example artificial-and virtual-reality, in accordance with some aspects of the subject technology. A computing system 1320 and an optional housing 1390, each of which show components that can be included in AR system 1100 and/or VR system 1210 are depicted in FIG. 13. In some embodiments, more or fewer components can be included in optional housing 1390 depending on practical restraints of the respective AR system being described.

In some embodiments, computing system 1320 can include one or more peripherals interfaces 1322A and/or optional housing 1390 can include one or more peripherals interfaces 1322B. Each of the computing system 1320 and optional housing 1390 can also include one or more power systems 1342A and 1342B, one or more controllers 1346 (including one or more haptic controllers 1347), one or more processors 1348A and 1348B (as defined above, including any of the examples provided), and memory 1350A and 1350B, which can all be in electronic communication with each other. For example, the one or more processors 1348A and 1348B can be configured to execute instructions stored in memory 1350A and 1350B, which can cause a controller of one or more of controllers 1346 to cause operations to be performed at one or more peripheral devices connected to peripherals interface 1322A and/or 1322B. In some embodiments, each operation described can be powered by electrical power provided by power system 1342A and/or 1342B.

In some embodiments, peripherals interface 1322A can include one or more devices configured to be part of computing system 1320, some of which have been defined above and/or described with respect to the wrist-wearable devices shown in FIGS. 9 and 10. For example, peripherals interface 1322A can include one or more sensors 1323A. Some example sensors 1323A include one or more coupling sensors 1324, one or more acoustic sensors 1325, one or more imaging sensors 1326, one or more EMG sensors 1327, one or more capacitive sensors 1328, one or more IMU sensors 1329, and/or any other types of sensors explained above or described with respect to any other embodiments discussed herein.

In some embodiments, peripherals interfaces 1322A and 1322B can include one or more additional peripheral devices, including one or more NFC devices 1330, one or more GPS devices 1331, one or more LTE devices 1332, one or more Wi-Fi and/or Bluetooth devices 1333, one or more buttons 1334 (e.g., including buttons that are slidable or otherwise adjustable), one or more displays 1335A and 1335B, one or more speakers 1336A and 1336B, one or more microphones 1337, one or more cameras 1338A and 1338B (e.g., including the left camera 1339A and/or a right camera 1339B), one or more haptic devices 1340, and/or any other types of peripheral devices defined above or described with respect to any other embodiments discussed herein.AR systems can include a variety of types of visual feedback mechanisms (e.g., presentation devices). For example, display devices in AR system 1100 and/or VR system 1210 can include one or more liquid-crystal displays (LCDs), light emitting diode (LED) displays, organic LED (OLED) displays, and/or any other suitable types of display screens. Artificial-reality systems can include a single display screen (e.g., configured to be seen by both eyes), and/or can provide separate display screens for each eye, which can allow for additional flexibility for varifocal adjustments and/or for correcting a refractive error associated with a user's vision. Some embodiments of AR systems also include optical subsystems having one or more lenses (e.g., conventional concave or convex lenses, Fresnel lenses, or adjustable liquid lenses) through which a user can view a display screen.

For example, respective displays 1335A and 1335B can be coupled to each of the lenses 1106-1 and 1106-2 of AR system 1100. Displays 1335A and 1335B may be coupled to each of lenses 1106-1 and 1106-2, which can act together or independently to present an image or series of images to a user. In some embodiments, AR system 1100 includes a single display 1335A or 1335B (e.g., a near-eye display) or more than two displays 1335A and 1335B. In some embodiments, a first set of one or more displays 1335A and 1335B can be used to present an augmented-reality environment, and a second set of one or more display devices 1335A and 1335B can be used to present a virtual-reality environment. In some embodiments, one or more waveguides are used in conjunction with presenting artificial-reality content to the user of AR system 1100 (e.g., as a means of delivering light from one or more displays 1335A and 1335B to the user's eyes). In some embodiments, one or more waveguides are fully or partially integrated into the eyewear device 1102. Additionally, or alternatively to display screens, some artificial-reality systems include one or more projection systems. For example, display devices in AR system 1100 and/or VR system 1210 can include micro-LED projectors that project light (e.g., using a waveguide) into display devices, such as clear combiner lenses that allow ambient light to pass through. The display devices can refract the projected light toward a user's pupil and can enable a user to simultaneously view both artificial-reality content and the real world. Artificial-reality systems can also be configured with any other suitable type or form of image projection system. In some embodiments, one or more waveguides are provided additionally or alternatively to the one or more display(s) 1335A and 1335B.

Computing system 1320 and/or optional housing 1390 of AR system 1100 or VR system 1210 can include some or all of the components of a power system 1342A and 1342B. Power systems 1342A and 1342B can include one or more charger inputs 1343, one or more PMICs 1344, and/or one or more batteries 1345A and 1344B.

Memory 1350A and 1350B may include instructions and data, some or all of which may be stored as non-transitory computer-readable storage media within the memories 1350A and 1350B. For example, memory 1350A and 1350B can include one or more operating systems 1351, one or more applications 1352, one or more communication interface applications 1353A and 1353B, one or more graphics applications 1354A and 1354B, one or more AR processing applications 1355A and 1355B, and/or any other types of data defined above or described with respect to any other embodiments discussed herein.

Memory 1350A and 1350B also include data 1360A and 1360B, which can be used in conjunction with one or more of the applications discussed above. Data 1360A and 1360B can include profile data 1361, sensor data 1362A and 1362B, media content data 1363A, AR application data 1364A and 1364B, and/or any other types of data defined above or described with respect to any other embodiments discussed herein.

In some embodiments, controller 1346 of eyewear device 1102 may process information generated by sensors 1323A and/or 1323B on eyewear device 1102 and/or another electronic device within AR system 1100. For example, controller 1346 can process information from acoustic sensors 1125-1 and 1125-2. For each detected sound, controller 1346 can perform a direction of arrival (DOA) estimation to estimate a direction from which the detected sound arrived at eyewear device 1102 of AR system 1100. As one or more of acoustic sensors 1325 (e.g., the acoustic sensors 1125-1, 1125-2) detects sounds, controller 1346 can populate an audio data set with the information (e.g., represented in FIG. 13 as sensor data 1362A and 1362B).

In some embodiments, a physical electronic connector can convey information between eyewear device 1102 and another electronic device and/or between one or more processors 1148, 1348A, 1348B of AR system 1100 or VR system 1210 and controller 1346. The information can be in the form of optical data, electrical data, wireless data, or any other transmittable data form. Moving the processing of information generated by eyewear device 1102 to an intermediary processing device can reduce weight and heat in the eyewear device, making it more comfortable and safer for a user. In some embodiments, an optional wearable accessory device (e.g., an electronic neckband) is coupled to eyewear device 1102 via one or more connectors. The connectors can be wired or wireless connectors and can include electrical and/or non-electrical (e.g., structural) components. In some embodiments, eyewear device 1102 and the wearable accessory device can operate independently without any wired or wireless connection between them.

In some situations, pairing external devices, such as an intermediary processing device (e.g., HIPD 506, 606, 706) with eyewear device 1102 (e.g., as part of AR system 1100) enables eyewear device 1102 to achieve a similar form factor of a pair of glasses while still providing sufficient battery and computation power for expanded capabilities. Some, or all, of the battery power, computational resources, and/or additional features of AR system 1100 can be provided by a paired device or shared between a paired device and eyewear device 1102, thus reducing the weight, heat profile, and form factor of eyewear device 1102 overall while allowing eyewear device 1102 to retain its desired functionality. For example, the wearable accessory device can allow components that would otherwise be included on eyewear device 1102 to be included in the wearable accessory device and/or intermediary processing device, thereby shifting a weight load from the user's head and neck to one or more other portions of the user's body. In some embodiments, the intermediary processing device has a larger surface area over which to diffuse and disperse heat to the ambient environment. Thus, the intermediary processing device can allow for greater battery and computation capacity than might otherwise have been possible on eyewear device 1102 standing alone. Because weight carried in the wearable accessory device can be less invasive to a user than weight carried in the eyewear device 1102, a user may tolerate wearing a lighter eyewear device and carrying or wearing the paired device for greater lengths of time than the user would tolerate wearing a heavier eyewear device standing alone, thereby enabling an artificial-reality environment to be incorporated more fully into a user's day-to-day activities.

AR systems can include various types of computer vision components and subsystems. For example, AR system 1100 and/or VR system 1210 can include one or more optical sensors such as two-dimensional (2D) or three-dimensional (3D) cameras, time-of-flight depth sensors, structured light transmitters and detectors, single-beam or sweeping laser rangefinders, 3D LiDAR sensors, and/or any other suitable type or form of optical sensor. An AR system can process data from one or more of these sensors to identify a location of a user and/or aspects of the use's real-world physical surroundings, including the locations of real-world objects within the real-world physical surroundings. In some embodiments, the methods described herein are used to map the real world, to provide a user with context about real-world surroundings, and/or to generate digital twins (e.g., interactable virtual objects), among a variety of other functions. For example, FIGS. 12A and 12B show VR system 1210 having cameras 1239A to 1239D, which can be used to provide depth information for creating a voxel field and a two-dimensional mesh to provide object information to the user to avoid collisions.

In some embodiments, AR system 1100 and/or VR system 1210 can include haptic (tactile) feedback systems, which may be incorporated into headwear, gloves, body suits, handheld controllers, environmental devices (e.g., chairs or floormats), and/or any other type of device or system, such as the wearable devices discussed herein. The haptic feedback systems may provide various types of cutaneous feedback, including vibration, force, traction, shear, texture, and/or temperature. The haptic feedback systems may also provide various types of kinesthetic feedback, such as motion and compliance. The haptic feedback may be implemented using motors, piezoelectric actuators, fluidic systems, and/or a variety of other types of feedback mechanisms. The haptic feedback systems may be implemented independently of other artificial-reality devices, within other artificial-reality devices, and/or in conjunction with other artificial-reality devices.

In some embodiments of an artificial reality system, such as AR system 1100 and/or VR system 1210, ambient light (e.g., a live feed of the surrounding environment that a user would normally see) can be passed through a display element of a respective head-device presenting aspects of the AR system. In some embodiments, ambient light can be passed through a portion less that is less than all of an AR environment presented within a user's field of view (e.g., a portion of the AR environment co-located with a physical object in the user's real-world environment that is within a designated boundary (e.g., a guardian boundary) configured to be used by the user while they are interacting with the AR environment). For example, a visual user interface element (e.g., a notification user interface element) can be presented at the head-wearable device, and an amount of ambient light (e.g., 15-50% of the ambient light) can be passed through the user interface element such that the user can distinguish at least a portion of the physical environment over which the user interface element is being displayed.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

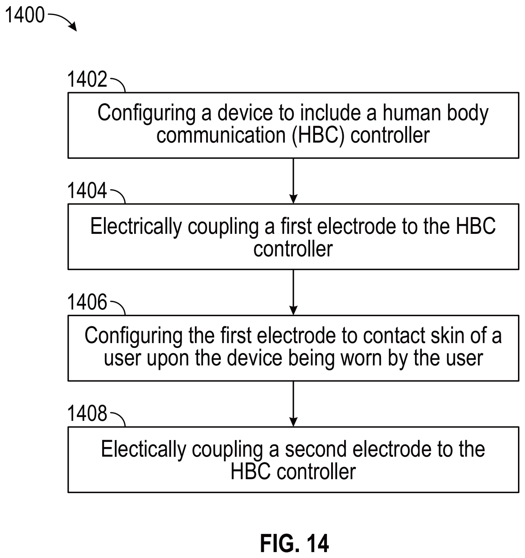

FIG. 14 is a flow diagram illustrating an example of method 1400 of manufacturing a device of the subject technology. In some implementations, the method 1400 includes the steps 1402, 1404, 1406 and 1408 described below.

In step 1402, a device is configured to include an HBC controller.

In step 1404, a first electrode is electrically coupled to the HBC controller.

In step 1406, the first electrode is configured to contact skin of a user upon the device being worn by the user.

In step 1408, a second electrode is electrically coupled to the HBC controller.

An aspect of the subject technology is directed to a device including an HBC controller and a first electrode electrically coupled to the HBC controller and arranged to contact skin of a user when the user wears the device. The device further includes a second electrode electrically coupled to the HBC controller.

In some implementations, the device is an eyewear device.

In one or more implementations, the device comprises a frame and at least a first lens, wherein the second electrode comprises a transparent electrode arranged within the first lens and wherein the first electrode is arranged within the frame.

In some implementations, the first electrode is arranged on a nose bridge portion of the frame.

In one or more implementations, the HBC controller is configured to transmit and/or receive signals at the first electrode, and wherein the second electrode comprises a floating ground electrode.

In some implementations, the device further comprises a display, and wherein the second electrode comprises a transparent layer within the display.

In one or more implementations, the second electrode comprises a transparent electrode functioning as an active dimming layer of the display.

In some implementations, the second electrode comprises a transparent electrode functioning as a display shield.

In one or more implementations, the second electrode comprises a transparent metal layer.

In some implementations, the second electrode comprises transparent metal layer including indium-tin-oxide (ITO).

In one or more implementations, at least one of the first electrode or the second electrode is electrically coupled to the HBC controller.

Another aspect of the subject technology is directed a method including configuring a device to include an HBC controller, electrically coupling a first electrode to the HBC controller and configuring the first electrode to contact skin of a user upon the device being worn by the user. The method further includes electrically coupling a second electrode to the HBC controller.

In some implementations, the method further comprises configuring the HBC to transmit and/or receive signals at the first electrode, and wherein the second electrode comprises a transparent electrode functioning as a floating ground electrode.

In one or more implementations, the device is an eyewear device comprising a frame and at least a first lens.

In some implementations, the method further comprises arranging the second electrode within the first lens and arranging the first electrode on a nose bridge portion of the frame.

In one or more implementations, the method further comprises configuring the device to include a display; arranging the second electrode as a layer within the display; and configuring the second electrode to function as an active dimming layer of the display.

In some implementations, the second electrode comprises one of a display shield, a transparent metal layer including as ITO, and the method further comprises electrically coupling at least one of the first electrode or the second electrode to the HBC controller.

Yet another aspect of the subject technology is directed to a wearable electronic device consisting of a housing including a first electrode, an HBC controller electrically coupled to the first electrode and configured to transmit and/or receive signals at the first electrode and a second electrode electrically coupled to the HBC controller. The first electrode is arranged to contact skin of a user when the user wears the device.

In one or more implementations, the device is an eyewear device comprising a frame and at least a first lens, the second electrode comprises a transparent electrode arranged within the first lens and configured to function as a floating ground, and the first electrode is arranged on a nose bridge portion of the frame.

In some implementations, the method further comprises a display, and the second electrode is a transparent layer within the display, and the transparent layer comprises a transparent metal layer including ITO or a mesh and is configured to function as one of an active dimming layer of the display or display shield.

In some implementations, the word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." Pronouns in the masculine (e.g., his) include the feminine and neuter gender (e.g., her and its) and vice versa. The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions.

While this specification contains many specifics, these should not be construed as limitations on the scope of the appended claims, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially described as such, one or more features from a described combination can in some cases be excised from the combination, and the described combination may be directed to a sub-combination or variation of a sub-combination.

The subject matter of this specification has been described in terms of particular aspects, but other aspects can be implemented and are within the scope of the appended claims. For example, while operations are depicted in the drawings in a particular order, this should not be understood as requiring that such operations be performed in the particular order shown or in sequential order, or that all illustrated operations be performed, to achieve desirable results. The actions recited in the clauses can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

The title, background, brief description of the drawings, abstract, and drawings are hereby incorporated into the disclosure and are provided as illustrative examples of the disclosure, not as restrictive descriptions. It is submitted with the understanding that they will not be used to limit the scope the appended claims. In addition, in the detailed description, it can be seen that the description provides illustrative examples, and the various features are grouped together in various implementations for the purpose of streamlining the disclosure. The method of disclosure is not to be interpreted as reflecting an intention that the described subject matter requires more features than are expressly recited in each clause. Rather, as the clauses reflect, inventive subject matter lies in less than all features of a single disclosed configuration or operation. The clauses are hereby incorporated into the detailed description, with each clause standing on its own as a separately described subject matter.

As used herein, the phrase "at least one of" preceding a series of items, with the terms "and" or "or" to separate any of the items, modifies the list as a whole, rather than each member of the list (i.e., each item).

To the extent that the term "include," "have," or the like is used in the description or the claims, such term is intended to be inclusive in a manner similar to the term "comprise" as "comprise" is interpreted when employed as a transitional word in a claim.

A reference to an element in the singular is not intended to mean "one and only one" unless specifically stated, but rather "one or more."

While this specification contains many specifics, these should not be construed as limitations on the scope of the appended claimes, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

## Claims

1. A device comprising:
a human body communication (HBC) controller;
a first electrode electrically coupled to the HBC controller and arranged to contact skin of a user when the user wears the device; and
a second electrode electrically coupled to the HBC controller.

2. The device of claim 1, wherein the device is an eyewear device.

3. The device of claim 2, comprising a frame and at least a first lens, wherein the second electrode comprises a transparent electrode arranged within the first lens and wherein the first electrode is arranged within the frame;
optionally, wherein the first electrode is arranged on a nose bridge portion of the frame.

4. The device of any preceding claim, wherein the HBC controller is configured to transmit and/or receive signals at the first electrode, and wherein the second electrode comprises a floating ground electrode.

5. The device of any preceding claim, further comprising a display, and wherein the second electrode comprises a transparent layer within the display.

6. The device of claim 5, wherein the second electrode comprises a transparent electrode functioning as an active dimming layer of the display, and wherein the transparent electrode further functions as at least one of a floating ground for a body area network (BAN), a wireless antenna for at least one of Bluetooth, Wi-Fi and cellular network;
optionally, wherein the second electrode comprises a transparent electrode functioning as a display shield.

7. The device of any preceding claim, wherein the second electrode comprises a transparent metal layer;
optionally, wherein the transparent metal layer comprises indium-tin-oxide (ITO).

8. The device of any preceding claim, wherein at least one of the first electrode or the second electrode is electrically coupled to the HBC controller.

9. A method, comprising:
configuring a device to comprise an HBC controller;
electrically coupling a first electrode to the HBC controller;
configuring the first electrode to contact skin of a user upon the device being worn by the user; and
electrically coupling a second electrode to the HBC controller.

10. The method of claim 9, further comprising configuring the HBC to transmit and/or receive signals at the first electrode, and wherein the second electrode comprises a transparent electrode functioning as a floating ground electrode.

11. The method of claim 9 or claim 10, wherein the device is an eyewear device comprising a frame and at least a first lens;
optionally, the method further comprising arranging the second electrode within the first lens and arranging the first electrode on a nose bridge portion of the frame.

12. The method of any one of claims 9 to 11, further comprising:
configuring the device to comprise a display;
arranging the second electrode as a layer within the display; and
configuring the second electrode to function as an active dimming layer of the display.

13. The method of any one of claims 9 to 12, wherein the second electrode comprises one of a display shield, a transparent metal layer comprising as ITO, and the method further comprises electrically coupling at least one of the first electrode or the second electrode to the HBC controller.

14. A wearable electronic device, the device comprising:
a housing comprising a first electrode;
an HBC controller electrically coupled to the first electrode and configured to transmit and/or receive signals at the first electrode; and
a second electrode electrically coupled to the HBC controller,
wherein the first electrode is arranged to contact skin of a user when the user wears the device.

15. The wearable electronic device of claim 14, wherein:
the device is an eyewear device comprising a frame and at least a first lens,
the second electrode comprises a transparent electrode arranged within the first lens and configured to function as a floating ground, and
the first electrode is arranged on a nose bridge portion of the frame; and
optionally, the wearable electronic device further comprising a display, wherein: the second electrode is a transparent layer within the display, and
the transparent layer comprises a transparent metal layer comprising ITO or a mesh and is configured to function as at least one of an active dimming layer of the display, a display shield, a floating ground for a body area network (BAN), or a wireless antenna for at least one of Bluetooth, Wi-Fi and cellular network.
